(19) Europäisches Patentamt
European Patent Office
Office européen des brevets

(11) EP 2 442 469 A1

(12) EUROPEAN PATENT APPLICATION
published in accordance with Art. 153(4) EPC

(43) Date of publication:
**18.04.2012 Bulletin 2012/16**

(21) Application number: **10786063.7**

(22) Date of filing: **25.05.2010**

(51) Int Cl.:
***H04J 11/00*** (2006.01) ***H04B 1/10*** (2006.01)
***H04B 7/005*** (2006.01) ***H04B 7/04*** (2006.01)
***H04J 99/00*** (2009.01)

(86) International application number:
**PCT/JP2010/058802**

(87) International publication number:
**WO 2010/143532 (16.12.2010 Gazette 2010/50)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **12.06.2009 JP 2009141267**

(71) Applicants:
- **Sharp Kabushiki Kaisha**
  **Osaka-shi, Osaka 545-8522 (JP)**
- **Tokyo Institute of Technology**
  **Tokyo 152-8550 (JP)**

(72) Inventors:
- **YAMADA, Ryota**
  **Osaka, 545-8522 (JP)**
- **KATO, Katsuya**
  **Osaka, 545-8522 (JP)**
- **YOSHIMOTO, Takashi**
  **Osaka, 545-8522 (JP)**
- **SUZUKI, Hiroshi**
  **Tokyo, 152-8550 (JP)**
- **FUKAWA, Kazuhiko**
  **Tokyo, 152-8550 (JP)**
- **SUYAMA, Satoshi**
  **Tokyo, 152-8550 (JP)**

(74) Representative: **Müller - Hoffmann & Partner**
**Patentanwälte**
**Innere Wiener Strasse 17**
**81667 München (DE)**

# (54) RECEIVING APPARATUS AND RECEIVING METHOD

(57) To provide a receiving apparatus and reception method that can reduce degradation due to multipath interference without increasing the amount of computation even in a system that has a large number of subcarriers.

A signal detector 205, using the symbol replica generated by symbol replica generator 208 and the channel estimate which a channel estimator 209 estimated based on the received pilot signal, suppresses interference attributed to delayed waves exceeding the GI and outputs a suppressed signal for the receivedsignal. Ademodulator 206 decodes the signal of which interference has been alleviated, to determine code bit LLR as bit likelihood information. A decoder 207 performs an error correction decoding process on the input code bit LLR. If no error exists in the result of error correction decoding, the decoder outputs information bits to complete the reception process. If there is an error in the decoded result, the decoder outputs the code bit LLR to symbol replica generator 208.

FIG. 2

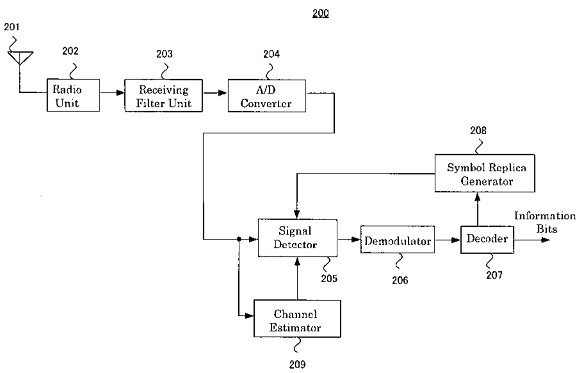


EP 2 442 469 A1

## Description

### Technical Field

The present invention relates to a receiving apparatus and receiving method for suppressing degradation of reception characteristics due to inter symbol interference and carrier interference in a multicarrier transmission system in radio communication.

### Background Art

In radio transmission systems of multicarrier transmission such as OFDM (Orthogonal Frequency Division Multiplexing), OFDMA (Orthogonal Frequency Division Multiple Access), MC-CDM (Multi Carrier-Code Division Multiplexing and the like, inserting a GI (Guard Interval) makes it possible to reduce the influence of multipath interference if delayed waves fall within the GI length. However, if delayed waves exceeding the GI length exist as shown in FIG. 15, this causes degradation. FIG. 15 shows channel impulse response values in a 12 wave multipath model, in which six leading waves fall within the guard interval section and the other six waves fall out of that section. In this case, the preceding symbols enter the FFT (Fast Fourier Transform) unit as shown in FIG. 16, causing inter symbol interference (ISI: Inter Symbol Interference), and also inter carrier inference (ICI: Inter Carrier Interference) attributed to periodicity corruption occurs. The ISI and ICI become factors that sharply degrade reception characteristics.

As a countermeasure against ISI and ICI, there is an idea of making the GI length greater. However, GI is a redundant section, so that there occurs the problem that the greater GI length degrades transmission efficiency.

As a method of unvarying the GI length, Patent Document 1 discloses a method in which a replica signal of ISI and a replica signal of ICI are generated for every subcarrier to remove them from the received signal to thereby obtain excellent reception characteristics.

### Prior Art Documents

#### Patent Document

Patent Document 1:

Japanese Patent Application Laid-open 2004-221702

### Summary of the Invention

#### Problems to be solved by the Invention

In Patent Document 1, ICI is removed by generating its replica signal for each subcarrier. In this case, however, in a system having a large number of subcarriers, there occurs a computation increase problem.

In view of the above circumstances, it is an object of the present invention to provide a receiving apparatus and reception method that can reduce degradation due to ISI and ICI without increasing the amount of computation even in a system that has a large number of subcarriers. Means for Solving the Problems

The present invention is a receiving apparatus for receivingsignalsbased on a multicarrier transmission system, comprising: a decoder for calculating bit likelihood by error correction decoding; a symbol replica generator for generating a symbol replica based on the bit likelihood; a channel estimator for calculating channel estimate by channel estimation; and a signal detector for reducing multipath interference, and is **characterized in that** the signal detector includes: an interference canceller for canceling inter carrier interference as a whole, based on the channel estimate and the symbol replicas; and a combiner for combining the outputs from the interference canceller.

Herein, the interference canceller includes: a division-use replica generator for generating a division-use replica using part of the channel estimate; a multipath divider for performing multipath division by subtracting the division-use replicas from a received signal; an FFT unit for generating a frequency domain signal by performing Fourier transform on the signals obtained by multipath division; and a desired signal adder for adding a component of the division-use replica that will not cause inter carrier interference, to the frequency domain signal.

Further, the interference canceller includes: a received signal replica generator for generating a replica of a received signal using the channel estimate; a replica subtractor for subtracting the replica of the received signal from the received signal; an FFT unit for generating multiple frequency domain signals by performing Fourier transform on the signals with the replica subtracted, in different intervals; and, a desired signal adder for adding a component that will not cause inter carrier interference, to the multiple frequency domain signals.

The combiner combines the outputs from the interference canceller on a minimum mean square error basis, based on the bit likelihood.

The present invention is a receiving method of receiving a signal based on a multicarrier transmission system, comprising: a decoding step of calculating bit likelihood by error correction decoding; a symbol replica generating step of generating a symbol replica based on the bit likelihood; a channel estimating step of calculating a channel estimate by channel estimation; and, a signal detecting step of reducing multipath interference, and is **characterized in that** the signal detecting step includes: an interference canceling step of canceling inter carrier interference as a whole, based on the channel estimate and the symbol replicas; and a combining step of combining the outputs from the interference canceller.

Further, the receivingmethodof the present invention is **characterized in that** the decoding step and the signal detecting step are iteratively performed.

The present invention is a receiving apparatus for receiving signals based on a MIMO transmission system, comprising: a decoder for calculating bit likelihood by error correction decoding; a symbol replica generator for generating a symbol replica based on the bit likelihood; a channel estimator for calculating a channel estimate by channel estimation; and, a signal detector for reducing multipath interference, and is **characterized in that** the signal detector includes: an interference canceller for canceling inter carrier interference as a whole, based on the channel estimate and the symbol replicas; and a signal separator for performing MIMO signal separation on the output from the interference canceller.

Herein, the interference canceller includes: a division-use replica generator for generating a division-use replica using part of the channel estimate; a multipath divider for performing multipath division by subtracting the division-use replica from a received signal; an FFT unit for generating a frequency domain signal by performing Fourier transform on the signals obtained by multipath division; and a desired signal adder for adding a component of the division-use replica that will not cause inter carrier interference, to the frequency domain signal.

Further, the interference canceller includes: a received signal replica generator for generating a replica of a received signal using the channel estimate; a replica subtractor for subtracting the replica of the received signal from the received signal; an FFT unit for generating multiple frequency domain signals by performing Fourier transform on the signals with the replica subtracted, in different intervals; and, a desired signal adder for adding a component that will not cause inter carrier interference, to the multiple frequency domain signals.

Moreover, the signal separator performs MIMO signal separation by generating weights based on the channel estimate and multiplying the weights on received signals.

The signal separator performs MIMO signal separation by maximum likelihood detection.

The signal detector reduces multipath interference and inter stream interference.

The present invention is a receiving method of receiving signals based on a MIMO transmission system, comprising: a decoding step of calculating bit likelihood by error correction decoding; a symbol replica generating step of generating a symbol replica based on the bit likelihood; a channel estimating step of calculating a channel estimate by channel estimation; and, a signal detecting step of reducing multipath interference, and is **characterized in that** the signal detecting step includes: an interference canceling step of canceling inter carrier interference as a whole, based on the channel estimate and the symbol replicas; and a signal separating step of performing MIMO signal separation on the output from the interference canceller.

Further, the receiving method of the present invention is **characterized in that** the decoding step and the signal detecting step are iteratively performed.

Effect of the Invention

According to the present invention, the influence of inter carrier interference is removed as a whole from all the subcarriers, so that it is possible to perform interference cancellation with a lower amount of computation without regard to the number of subcarriers and also to obtain good reception performance.

Brief Description of the Drawings

[FIG. 1] is a block diagram showing a configuration of a transmitting apparatus according to the first embodiment.
[FIG. 2] is a block diagram showing a configuration of a receiving apparatus according to the first embodiment.
[FIG. 3] is a block diagram showing a configuration of a signal detector according to the first embodiment.
[FIG. 4] is a diagram showing an example of individual channel impulse responses in multipath in the first embodiment.
[FIG. 5] is a diagram showing a received signal that is divided into the multipath components of FIG. 4.
[FIG. 6] is a flow chart showing a receiving process in the first embodiment.
[FIG. 7] is a block diagram showing a configuration of a transmitting apparatus in the second embodiment.

[FIG. 8] is a block diagram showing a configuration of a receiving apparatus in the second embodiment.
[FIG. 9] is a block diagram showing a configuration of a signal detector in the second embodiment.
[FIG. 10] is a flow chart showing a receiving process in the second embodiment.
[FIG. 11] is a flow chart showing a receiving process in the third embodiment.
[FIG. 12] is a schematic diagram showing a relay system in the fourth embodiment.
[FIG. 13] is a diagram showing one example of a delay profile in a relay system in the fourth embodiment.
[FIG. 14] is a block diagram showing a configuration of a receiving apparatus in the fourth embodiment.
[FIG. 15] is a diagram showing an example of individual channel impulse responses in a 12 wave multipath.
[FIG. 16] is a diagram showing a received signal that is divided into multipath components of FIG. 15.

Mode for Carrying Out the Invention

Now, the embodiments of the present invention will be described using the drawings. Though the following embodiments will be described when applied to OFDM transmission, the present invention should not be limited to this. The present invention can be also be applied to transmission systems in which GIs are added, such as, for example, MC-CDMA (Multi Carrier-Code Division Multiple Access), SC-FDMA (Single Carrier-Frequency Division Multiple Access), DFT-s-OFDM (Discrete Fourier transform-spread Orthogonal Frequency Division Multiplexing) and the like.

(The First Embodiment)

FIG. 1 is a block diagram showing a configuration of a transmitting apparatus 100 in the first embodiment. Transmitting apparatus 100 includes a coder 101, a modulator 102, a mapping unit 103, an IFFT (Inverse Fast Fourier Transform) unit 104, a GI (Guard Interval) inserting unit 105, a D/A converter 106, a transmitting filter unit 107, a radio unit 108, a pilot generator 109 and a transmitting antenna 110.

To begin with, coder 101 codes information bits by using an error correction coding such as turbo coding, convolutional coding, LDP (Low Density Parity Check) coding or the like to output coded bits. Modulator 102 maps the coded bits onto the modulation symbol such as PSK (Phase Shift Keying), QAM (Quadrature Amplitude Modulation) or the like. Mapping unit 103 maps the modulation symbol and the pilot signal generated by pilot generator 109 to determine resources, then the mapped signal is frequency-time converted at IFFT unit 104. The time signal generated by IFFT unit 104 is added with a guard interval at GI inserting unit 105, digital-analog converted at D/A converter 106, waveform-shaped at transmitting filter unit 107, converted into a radio frequency at radio unit 108 and transmitted from transmitting antenna 110.

Here, the section output from the IFFT unit 104 with the GI section added at the GI inserting unit 105 is called an OFDM symbol.

It should be noted that the coded bits output from the coder 101 may be interleaved and then input to the modulator 102.

FIG. 2 is a block diagram showing a configuration of a receiving apparatus 200 in the first embodiment. Receiving apparatus 200 includes a receiving antenna 201, a radio unit 202, a receiving filter unit 203, an A/D converter 204, a signal detector 205, a demodulator 206, a decoder 207, a symbol replica generator 208 and a channel estimator 209.

The signal received at receiving antenna 201 is converted from the radio frequency to the baseband at radio unit 202, waveform-shaped at receiving filter unit 203, analog-digital converted at A/D converter 204 and output as a received signal. The following description will be given on the assumption that this received signal includes delayed waves exceeding the GI.

Signal detector 205, using the symbol replica generated by symbol replica generator 208 and the channel estimate which channel estimator 209 estimated based on the received pilot signal, suppresses interference attributed to delayed waves exceeding the GI and outputs a suppressed signal for the received signal. Here, the interference attributed to delayed waves exceeding the GI is also called multipath interference. This multipath interference includes ISI (Inter Symbol Interference) as interference between the preceding and following OFDM symbols and ICI (Inter carrier Interference) as interference between subcarriers.

Demodulator 206 decodes the signal of which interference has been alleviated, to determine code bit LLR (Log Likelihood Ratio) as bit likelihood information. Decoder 207 performs an error correction decoding process on the input code bit LLR. If no error exists in the result of error correction decoding, the decoder outputs information bits to complete the reception process. If there is an error in the decoded result, the decoder outputs the code bit LLR to symbol replica generator 208. Symbol replica generator 208 generates from the code bit LLR a symbol replica as an expected value of the modulation symbol.

Here, if, in transmitting apparatus 100, the coded bits output from the coder 101 were interleaved and then the signal was input to the modulator 102, in the receiving apparatus 200 the code bit LLR output from the demodulator 206 is deinterleaved first and then input to the decoder 207.

FIG. 3 is a block diagram showing a configuration of signal detector 205. Signal detector 205 includes an interference canceller 301 and a synthesizer 302. Interference canceller 301 includes a multipath divider 303, FFT units 304-1 to 304$N_B$, desired signal adders 305-1 to 305$N_B$ and a division-use replica generator 306 (also called as replica generator).

Multipath divider 303 separates the multipath components into $N_B$ blocks using the division-use replica which division-use replica generator 306 generates based on the symbol replica and the channel estimate. When the multipath is divided, ISI is removed. The divided multipath components are subjected to time-frequency conversion in FFT units 304-1 to 304-$N_B$ and added with a component that will not cause ICI at desired signal adders 305-1 to 305$N_B$, respectively. At this time, cancellation of ICI is not performed for each of individual subcarriers but is performed for all the subcarriers as a whole. The signals after interference cancellation are synthesized using MMSE (Minimum Mean Square Error) weights, for example.

Next, the details of signal detector 205 will be described. Here, description will be made on the assumption that the number into which the multipath is divided is 2.

FIG. 4 is a diagram showing an example of individual channel impulse responses in multipath. FIG. 5 shows a received signal that is divided into the multipath components in FIG. 4. Reference numerals p1 to p12 in FIG. 4 denote individual channel impulse responses in multipath. In FIG. 5, r1 denotes the signal that is received through p1, r2 denotes the signal that is received through p2, •••, and r12 denotes the signal that is received through p12. In reality, the received signal is the sum of r1 to r12. Multipath divider 303 divides the multipath into some or several blocks and extracts multipath components contained in each block, from the received signal.

For example, when the multipath is divided into two blocks as in FIGS. 4(b) and 4(c), block b1 consists of p1 to p6 and block b2 consists of p7 to p12. FIGS. 5 (b) and 5 (c) represents components of blocks b1 and b2 extracted from the received signal. Extraction of each block component from the received signal can be preformed by subtracting a division-use replica signal from the received signal. The division-use replica signal is a replica signal that is generated using channel impulse responses contained in the blocks other than the block to be extracted. For example, when the block b1 component is extracted from the received signal, the division-use replica signal is a replica of the signal received through block b2, or the signal having passed though p7 to p12. Similarly, when the block b2 component is extracted, the division-use replica signal is a replica of the signal received through block b1, or the signal having passed though p1 to p6. The signals thus divided are processed through FFT units 304-1 to 304-$N_B$ and desired signal adders 305-1 to 305-$N_B$.

Here, when the multipath is divided into two blocks, $N_B$ is equal to 2. For example, the block b1 signal is processed through FFT unit 304-1 and desired signal adder 305-1. The block b2 signal is processed through FFT unit 304-2 and desired signal adder 305-2. Each divided signal is converted by FFT into the frequency domain. FFT is performed on the basis of the front position of each block, shown in FIGS. 5(b) and 5(c). In desired signal adders 305-1 to 305-$N_B$, only the desired signal, that is, the component other than ICI is added to the frequency domain signal of each block. By this operation, a signal from which ICI is removed is generated for each block signal.

The above process will be describedusingmathematical expressions.

It is assumed that the number of division of multipath is 2 and the delay time from the first block to the second block is M. The number of FFT points is $N_{FFT}$, the number of effective subcarriers is $N_{sub}$, the number of GI points is G, and $N_s = N_{FFT} + G$. A received signal vector $r_{i,1}$ in the first blockof the i-thOFDM symbol can be represented as the following expression (1).

[Math 1]

$$\mathbf{r}_{i,1} = \mathbf{H}^1_{c,1}\mathbf{z}_i + \mathbf{H}^1_{c,2}\mathbf{z}_i + \mathbf{H}_{s,-1}\mathbf{z}_{i-1} + \mathbf{n}^1_i \qquad \cdots (1)$$

Expression (1) represents a state before division of multipath.

Here, $H^1_{c,1}$, $H^1_{c,2}$, $H_{s,-1}$, $z_i$ and $n^1_i$ can be represented as the following expressions (2) to (6), respectively. Here, $z_{i,n}$ represents the modulation symbol on the n-th subcarrier in the i-th symbol, $n_{i,k}$ represents noise at the k-th discrete point of time in i-th symbol. $F_r$ is an $N_{FFT}$-row, $N_{FFT}$-column inverse Fourier transform matrix and the p-th-row, q-th column component of $F_I$ is given by expression (7).

[Math 2]

$$\mathbf{H}_{c,1}^{1} = \mathbf{G}_{-}\mathbf{H}_{1}^{1}\mathbf{G}_{+}\mathbf{F}_{\mathrm{I}} \quad \cdots (2)$$

$$\mathbf{H}_{c,2}^{1} = \mathbf{G}_{-}\mathbf{H}_{2}^{1}\mathbf{G}_{+}\mathbf{F}_{\mathrm{I}} \quad \cdots (3)$$

$$\mathbf{H}_{s,-1} = \mathbf{G}_{-}\mathbf{H}_{-1}\mathbf{G}_{+}\mathbf{F}_{\mathrm{I}} \quad \cdots (4)$$

$$\mathbf{z}_{i} = (z_{i,1} \ \cdots \ z_{i,N_{sub}})^{T} \quad \cdots (5)$$

$$\mathbf{n}_{i}^{1} = (n_{i,G+1} \ \cdots \ n_{i,N_{s}})^{T} \quad \cdots (6)$$

$$(\mathbf{F}_{\mathrm{I}})_{p,q} = \frac{1}{\sqrt{N_{\mathrm{FFT}}}} \exp\left( j\frac{2\pi(p-1)(q-1)}{N_{\mathrm{FFT}}} \right) \quad \cdots (7)$$

Here, when the size of $z_i$ is smaller than $N_{FFT}$, inverse Fourier transform is performed by inserting zeros into the subcarriers unused by $z_i$. $G_+$ denotes an $N_s$-row, $N_{FFT}$-column guard interval insertion matrix and G- denotes an $N_{FFT}$-row, $N_s$-column guard interval removal matrix. $H^1{}_1$, $H^1{}_2$ and $H_{-1}$ are $N_s$-row, $N_s$-column channel matrixes for the first and second blocks of the desired symbol and $N_s$-row, $N_s$-column channel matrix for the previous symbol and are given by the following expressions (8), (9) and (10), respectively. Here, D is the number of paths.

[Math 3]

$$\mathbf{H}_{1}^{1} = \begin{pmatrix} h_1 & & & & \\ \vdots & \ddots & & & \\ h_M & \cdots & h_1 & & \\ & \ddots & & \ddots & \\ & & h_M & \cdots & h_1 \end{pmatrix} \quad \cdots (8)$$

$$\mathbf{H}_2^1 = \begin{pmatrix} \vdots & & & & & & \\ 0 & & & & & & \\ h_{M+1} & \ddots & & & & & \\ \vdots & \ddots & & & & & \\ h_D & \cdots & h_{M+1} & & & & \\ & \ddots & & \ddots & \ddots & & \\ & & h_D & \cdots & h_{M+1} & 0 & \cdots \end{pmatrix} \quad \cdots (9)$$

$$\mathbf{H}_{-1} = \begin{pmatrix} \cdots & 0 & h_D & \cdots & h_2 \\ & & \ddots & \ddots & \vdots \\ & & & \ddots & h_D \\ & & & & 0 \\ & & & & \vdots \end{pmatrix} \quad \cdots (10)$$

Similarly, the received signal $r_{i,2}$ in the second block of the i-th symbol can be represented as the following expression (11).

[Math 4]

$$\mathbf{r}_{i,2} = \mathbf{H}_{c,2}^2 \mathbf{z}_i + \mathbf{H}_{c,1}^2 \mathbf{z}_i + \mathbf{H}_{s,+1} \mathbf{z}_{i+1} + \mathbf{n}_i^2 \quad \cdots (11)$$

$H^2_{c,1}$, $H^2_{c,2}$, $H_{s,+1}$ and $n^2_i$ are given as the following expressions (12) to (15), respectively.

[Math 5]

$$\mathbf{H}_{c,1}^2 = \mathbf{G}_{-} \mathbf{H}_1^2 \mathbf{G}_{+} \mathbf{F}_{\mathbf{I}} \quad \cdots (12)$$

$$\mathbf{H}_{c,2}^2 = \mathbf{G}_{-} \mathbf{H}_2^2 \mathbf{G}_{+} \mathbf{F}_{\mathbf{I}} \quad \cdots (13)$$

$$\mathbf{H}_{s,+1} = \mathbf{G}_{-} \mathbf{H}_{+1} \mathbf{G}_{+} \mathbf{F}_{\mathbf{I}} \quad \cdots (14)$$

$$\mathbf{n}_i^2 = (n_{i,G+M+1} \ \cdots \ n_{i,N_s} \, n_{i+1,1} \cdots n_{i+1,M})^T \quad \cdots (15)$$

$H^2_1$, $H^2_2$ and $H_{+1}$ are $N_s$-row $N_s$-column channel matrixes for the first and second blocks of the desired symbol and $N_s$-row $N_s$-column channel matrix for the subsequent symbol, and given by the following expressions (16), (17) and

(18), respectively.

[Math 6]

$$\mathbf{H}_1^2 = \begin{pmatrix} 0 & h_M & \cdots & h_1 & & \\ & \ddots & \ddots & & \ddots & \\ & & & h_M & \cdots & h_1 \\ & & & & \ddots & \vdots \\ & & & & \ddots & h_M \\ & & & & & 0 \end{pmatrix} \quad \cdots (16)$$

$$\mathbf{H}_2^2 = \begin{pmatrix} h_{M+1} & & & & \\ \vdots & \ddots & & & \\ h_D & \cdots & h_{M+1} & & \\ & \ddots & & \ddots & \\ & & h_D & \cdots & h_{M+1} \end{pmatrix} \quad \cdots (17)$$

$$\mathbf{H}_{+1} = \begin{pmatrix} \vdots & & & & \\ 0 & & & & \\ h_1 & \ddots & & & \\ \vdots & \ddots & \ddots & & \\ h_M & \cdots & h_1 & 0 & \cdots \end{pmatrix} \quad \cdots (18)$$

Division of multipath can be performed by subtracting replicas of the signals for other blocks and the signals of the preceding and following OFDM symbols, for example from the received signal represented by expressions (1) and (11). The replica signal $r\hat{}_{i,1}$, for the first block of the i-th OFDM symbol and the replica signal $r\hat{}_{i,2}$, for the second block of the i-th OFDM symbol are represented by the following expressions (19) and (20).

[Math 7]

$$\hat{\mathbf{r}}_{i,1} = \mathbf{H}_{c,2}^1 \hat{z}_i + \mathbf{H}_{s,-1} \hat{z}_{i-1} \quad \cdots (19)$$

$$\hat{\mathbf{r}}_{i,2} = \mathbf{H}_{c,1}^2 \hat{z}_i + \mathbf{H}_{s,+1} \hat{z}_{i+1} \quad \cdots (20)$$

Here, $z\hat{}_i$ and $z\hat{}_{i-1}$ are the expected values of $z_i$ and $z_{i-1}$, respectively, and can be determined from code bit LLR.

Subtracting expression (19) from the received signal can produce the first block signal after multipath division and subtracting expression (20) from the received signal can produce the second block signal after multipath division. The signal of each block after multipath division, transformed in the frequency domain is given by the following expression (21).

[Math 8]

$$\mathbf{R}_i = \begin{pmatrix} \mathbf{R}_{i,1} \\ \mathbf{R}_{i,2} \end{pmatrix} = \begin{pmatrix} \mathbf{F}(\mathbf{r}_{i,1} - \hat{\mathbf{r}}_{i,1}) \\ \mathbf{F}(\mathbf{r}_{i,2} - \hat{\mathbf{r}}_{i,2}) \end{pmatrix} = \mathbf{\Gamma z}_i + \mathbf{X}(\mathbf{z}_i - \hat{\mathbf{z}}_i) + \mathbf{Y}(\mathbf{z}_{i-1} - \hat{\mathbf{z}}_{i-1}) + \mathbf{Z}(\mathbf{z}_{i+1} - \hat{\mathbf{z}}_{i+1}) + \mathbf{N} \quad \cdots (21)$$

Γ, X, Y, Z and N are matrixes given by the following expressions (22) to (26).

[Math 9]

$$\mathbf{\Gamma} = \begin{pmatrix} \mathbf{\Xi}_1 \\ \mathbf{\Xi}_2 \end{pmatrix} \quad \cdots (22)$$

$$\mathbf{X} = \begin{pmatrix} \mathbf{FH}_{c,2}^1 \\ \mathbf{FH}_{c,1}^2 \end{pmatrix} \quad \cdots (23)$$

$$\mathbf{Y} = \begin{pmatrix} \mathbf{FH}_{s,-1} \\ \mathbf{O}_{N_{sub},N_{sub}} \end{pmatrix} \quad \cdots (24)$$

$$\mathbf{Z} = \begin{pmatrix} \mathbf{O}_{N_{sub},N_{sub}} \\ \mathbf{FH}_{s,+1} \end{pmatrix} \quad \cdots (25)$$

$$\mathbf{N} = \begin{pmatrix} \mathbf{Fn}_i^1 \\ \mathbf{Fn}_i^2 \end{pmatrix} \quad \cdots (26)$$

$\Xi_1$ and $\Xi_2$ are $N_{sub}$-row, $N_{sub}$-column matrixes whose elements are the frequency responses of the channel impulse responses contained in the first and second blocks. When the maximum delay time in the block is equal to or shorter than GI, $\Xi_1$ and $\Xi_2$ are given as diagonal matrixes as shown in the following expressions (27) and (28). Channel matrixes $H_{n,1}$ and $H_{n,2}$ for the first and second blocks of the desired symbol are shown in the following expressions (29) and (30).

[Math 10]

$$\Xi_1 = \mathbf{FH}^1_{c,1} = \mathrm{diag}(H_{1,1} \ \cdots \ H_{N_{sub},1}) \quad \cdots (27)$$

$$\Xi_2 = \mathbf{FH}^2_{c,2} = \mathrm{diag}(H_{1,2} \ \cdots \ H_{N_{sub},2}) \quad \cdots (28)$$

$$H_{n,1} = \sum_{d=1}^{M} h_d \exp\left(-j\frac{2\pi n}{N_{\mathrm{FFT}}}(d-1)\right) \quad \cdots (29)$$

$$H_{n,2} = \sum_{d=M+1}^{D} h_d \exp\left(-j\frac{2\pi n}{N_{\mathrm{FFT}}}(d-M-1)\right) \quad \cdots (30)$$

$O_{a,b}$ represents an a-row and b-column null matrix, and diag(a) represents a diagonal matrix having vector a as its diagonal elements.

Here, matrix X is decomposed as the following expression (31).

[Math 11]

$$\mathbf{X} = \mathbf{X}_{\mathrm{d}} + \mathbf{X}_{\mathrm{ICI}} \quad \cdots (31)$$

$X_d$ is a matrix represented by the following expression (32).

[Math 12]

$$\mathbf{X}_{\mathrm{d}} = \begin{pmatrix} \mathrm{diag}(\mathbf{x}^1_{d,2}) \\ \mathrm{diag}(\mathbf{x}^2_{d,1}) \end{pmatrix} \quad \cdots (32)$$

Here, $x^1_{d,2}$ and $x^2_{d,1}$ are vectors having the diagonal components of $FH^1_{c,1}$ and $FH^2_{c,2}$, as their elements, respectively. Accordingly, $X_d$ forms the component that will not cause ICI. $X_{ICI}$ is the factor other than $X_d$, hence becomes the component that causes ICI. As a result, it is possible to generate a signal with ICI removed from all the subcarriers as a whole, by adding a replica that is generated using $X_d$ to multipath-divided signal $R_i$, as shown in the following expression (33). 'A' used in expression (33) is given by the following expression (34).

[Math 13]

$$\tilde{\mathbf{R}}_i = \mathbf{R}_i + \mathbf{X}_d \hat{z}_i$$
$$= \mathbf{A}\mathbf{z}_i + \mathbf{X}_{ICI}(\mathbf{z}_i - \hat{\mathbf{z}}_i) + \mathbf{Y}(\mathbf{z}_{i-1} - \hat{\mathbf{z}}_{i-1}) + \mathbf{Z}(\mathbf{z}_{i+1} - \hat{\mathbf{z}}_{i+1}) + \mathbf{N} \quad \cdots (33)$$

$$\mathbf{A} = \mathbf{\Gamma} + \mathbf{X}_d \quad \cdots (34)$$

Desired signal adders 305-1 to 305-$N_B$ output $R^{\sim}_i$. The signals that were divided from the multipath and had the ICI component alone removed are synthesized on the basis of MMSE. Though MMSE may be performed as a whole for all the subcarriers, description herein will be made by referring to a method of performing MMSE for each subcarrier. Since the above mathematical expressions are given to deal with all the subcarriers, the following explanation will use modified representation for the n-th subcarrier component as in the following expressions (35) to (40).

[Math 14]

$$\mathbf{R}_i \rightarrow \mathbf{y}_{i,n} = \begin{pmatrix} \mathbf{e}_n^T \mathbf{R}_{i,1} \\ \mathbf{e}_n^T \mathbf{R}_{i,2} \end{pmatrix} \quad \cdots (35)$$

$$\mathbf{A} \rightarrow \mathbf{A}_n = \begin{pmatrix} \mathbf{e}_n^T (\mathbf{\Xi}_1 + \mathrm{diag}(\mathbf{x}_{d,2}^1)) \\ \mathbf{e}_n^T (\mathbf{\Xi}_2 + \mathrm{diag}(\mathbf{x}_{d,1}^2)) \end{pmatrix} \quad \cdots (36)$$

$$\mathbf{X}_{ICI} \rightarrow \mathbf{X}_{ICI,n} = \begin{pmatrix} \mathbf{e}_n^T (\mathbf{F}\mathbf{H}_{c,2}^1 - \mathrm{diag}(\mathbf{x}_{d,2}^1)) \\ \mathbf{e}_n^T (\mathbf{F}\mathbf{H}_{c,1}^2 - \mathrm{diag}(\mathbf{x}_{d,1}^2)) \end{pmatrix} \quad \cdots (37)$$

$$\mathbf{Y} \rightarrow \mathbf{Y}_n = \begin{pmatrix} \mathbf{e}_n^T \mathbf{F} \mathbf{H}_{s,-1} \\ 0_{N_{sub}}^T \end{pmatrix} \quad \cdots (38)$$

$$\mathbf{Z} \rightarrow \mathbf{Z}_n = \begin{pmatrix} 0_{N_{sub}}^T \\ \mathbf{e}_n^T \mathbf{F} \mathbf{H}_{s,+1} \end{pmatrix} \quad \cdots (39)$$

$$\mathbf{N} \rightarrow \mathbf{N}_n = \begin{pmatrix} \mathbf{e}_n^T \mathbf{F} \mathbf{n}_i^1 \\ \mathbf{e}_n^T \mathbf{F} \mathbf{n}_i^2 \end{pmatrix} \quad \cdots (40)$$

$O_a$ and $e_n$ are an 'a'-dimensional null vector and an $N_{sub}$-dimensional vector with the n-th element equal to 1 and the others equal to zero, respectively.

MMSE weights $W_{i,n}$ in the n-th subcarrier are determined as shown in expressions (41) to (45).

[Math 15]

$$\mathbf{W}_{i,n} = \underset{\mathbf{W}_{i,n}}{\arg\min} E\left[ \left\| z_{i,n} - \mathbf{W}_{i,n}^H \mathbf{y}_{i,n} \right\|^2 \right] = (E[\mathbf{y}_{i,n} \mathbf{y}_{i,n}^H])^{-1} E[\mathbf{y}_{i,n} z_{i,n}^*] \quad \ldots (41)$$

$$\begin{aligned} E[\mathbf{y}_{i,n} \mathbf{y}_{i,n}^H] = {} & \mathbf{A}_n \mathbf{A}_n^H E[|z_{i,n}|^2] + \mathbf{X}_{\mathrm{ICI},n} \mathrm{diag}_n (E[|z_{i,n}|^2] - |\hat{z}_{i,n}|^2) \mathbf{X}_{\mathrm{ICI},n}^H \\ & + \mathbf{Y}_n \mathrm{diag}_n (E[|z_{i-1,n}|^2] - |\hat{z}_{i-1,n}|^2) \mathbf{Y}_n^H \\ & + \mathbf{Z}_n \mathrm{diag}_n (E[|z_{i+1,n}|^2] - |\hat{z}_{i+1,n}|^2) \mathbf{Z}_n^H + E[\mathbf{N}_n \mathbf{N}_n^H] \quad \ldots (42) \end{aligned}$$

$$E[\mathbf{N}_n \mathbf{N}_n^H] = \sigma_n^2 \begin{pmatrix} 1 & \alpha_{\mathrm{n}} \\ \alpha_{\mathrm{n}} & 1 \end{pmatrix} \quad \cdots (43)$$

$$\alpha_n = \frac{N_{\mathrm{FFT}} - M}{N_{\mathrm{FFT}}} \exp\left( -j \frac{2\pi n}{N_{\mathrm{FFT}}} M \right) \quad \cdots (44)$$

$$E[\mathbf{y}_{i,n} z^{*}_{i,n}] = \mathbf{A}_n \mathbf{e}_n E[| z_{i,n} |^2] \quad \cdots (45)$$

Here, $\mathrm{diag}_n(a_n)$ represents $\mathrm{diag}(a_1, a_2, \cdots aN)$ when n is set to satisfy $1 \leq n \leq N$.

For example, in a case of 16QAM consisting of $b_0$, $b_1$, $b_2$ and $b_3$, $z_{i,n}$ i is given as expression (46).

[Math 16]

$$z_{i,n} = \frac{2 - b_2}{\sqrt{10}} b_0 + j \frac{2 - b_3}{\sqrt{10}} b_1 \quad \cdots (46)$$

Here, $b_0$ and $b_1$ are assumed to determine the phase and $b_2$ and $b_3$ determines the amplitude. Each of $b_0$ to $b_3$ takes a value of +1 or -1; it is assumed that it takes +1 for a bit of 0 and -1 for a bit of 1.

At this time, $z\hat{}_{i,n} = E[z_{i,n}]$ can be represented as the following expression (47). Here, E[b] is given by expression (48).

[Math 17]

$$\hat{z}_{i,n} = \frac{2 - E[b_2]}{\sqrt{10}} E[b_0] + j \frac{2 - E[b_3]}{\sqrt{10}} E[b_1] \quad \cdots (47)$$

$$E[b] = \tanh\left( \frac{\lambda_b}{2} \right) \quad \cdots (48)$$

Here, tanh represents a hyperbolic tangent function. $\lambda_b$ represents LLR of a certain bit b.

$E[|z\hat{}_{i,n}|^2]$ can be determined as in expression (49).

[Math 18]

$$E[| z_{i,n} |^2] = 1 - \frac{2}{5}(E[b_2] + E[b_3]) \quad \cdots (49)$$

It is also possible to approximate $E[|z\hat{}_{i,n}|^2] = E[|z\hat{}_{i-1,n}|^2] = E[|z\hat{}_{i+1,n}|^2] = 1$.

Further, expression (43) is adapted to consider the noise correlation between the first block and the second block. However, no correlation may be given. When it is assumed that there is no correlation, $\alpha_n$ may and should be set equal to 0.

It is assumed that the expected values are equal to each other between symbols in the n-th subcarrier as the following expression (50).

[Math 19]

$$\rho_n = |\hat{z}_{i,n}|^2 = |\hat{z}_{i-1,n}|^2 = |\hat{z}_{i+1,n}|^2 \quad \cdots (50)$$

In this case, expression (42) can be approximated by the following expression (51).

[Math 20]

$$E[\mathbf{y}_{i,n}\mathbf{y}_{i,n}^H] \cong \mathbf{A}_n\mathbf{A}_n^H + (\mathbf{X}_{\mathrm{ICI},n}\mathbf{X}_{\mathbf{ICI},n}^H + \mathbf{Y}_n\mathbf{Y}_n^H + \mathbf{Z}_n\mathbf{Z}_n^H)(1-\rho_n) + E[\mathbf{N}_n\mathbf{N}_n^H] \quad \cdots (51)$$

When it is assumed that the ICI cancellation residue is small enough to be negligible, expressions (42) and (45) can be approximated by the following expressions (52) and (53).

[Math 21]

$$E[\mathbf{y}_{i,n}\mathbf{y}_{i,n}^H] \cong \mathbf{A}_n\mathbf{A}_n^H + (\mathbf{Y}_n\mathbf{Y}_n^H + \mathbf{Z}_n\mathbf{Z}_n^H)(1-\rho_n) + E[\mathbf{N}_n\mathbf{N}_n^H] \quad \cdots (52)$$

$$E[\mathbf{y}_{i,n}z_{i,n}^*] \cong \mathbf{A}_n\mathbf{e}_n \quad \cdots (53)$$

When the interference cancellation residue is approximated with noise, the above expressions can be further transformed into the following expressions (54) and (55).

[Math 22]

$$E[\mathbf{y}_{i,n}\mathbf{y}_{i,n}^H] \cong \mathbf{A}_n\mathbf{A}_n^H + \sigma_{\mathbf{res}}^2 \quad \cdots (54)$$

$$\sigma_{\mathrm{res}}^2 = (\mathbf{Y}_n\mathbf{Y}_n^H + \mathbf{Z}_n\mathbf{Z}_n^H)(1-\rho_n) + \sigma_n^2 \quad \cdots (55)$$

Here, $\sigma_{res}^2$ in expression (55) only includes the ISI cancellation residue, but the ICI cancellation residue may also be taken into consideration.

Further, it is assumed that the interference cancellation residue is small enough to be negligible, the above expression may be further transformed into the following expression (56).

[Math 23]

$$E[\mathbf{y}_{i,n}\mathbf{y}_{i,n}^{H}] \cong \mathbf{A}_n\mathbf{A}_n^{H} + \sigma_n^2 \qquad \cdots (56)$$

The above E $[y_{i,n}y_{i,n}^H]$ and $E[y_{i,n}z_{i,n}^*]$ may be combined freely. Apparent from the expressions, the amount of calcuation can be reduced as approximations are added.

Using the thus determined MMSE weights $W_{i,n}$, $W_{i,n}^H y_{i,n}$ is multiplied on the received signal of the n-th subcarrier to thereby perform MMSE synthesis.

FIG. 6 is a flow chart of the receiving process in the first embodiment.
This receiving process is implemented in receiving apparatus 200. The signal received by receiving antenna 201 passes through radio unit 202, receiving filter unit 203 and A/D converter 204, is digital/analog converted and output as a received signal, as described above. The following flow starts from the step at which this received signal is processed by signal detector 205.

At Step s601, multipath divider 303 divides the multipath into $N_B$ blocks, using division-use replica signals generated at Step s609 by division-use replica generator 306. Ate Step s602, the received signals that have been multipath-divided are transformed by FFT units 304-1 to 304-$N_B$ into the frequencydomain. At Step s603, desired signal adders 305-1 to 305-$N_B$ add a component that will not bring about ICI to the divided received signal to perform ICI cancellation. At Step s604, synthesizer 302 synthesizes the signals obtained at Step s603 by means of an MMSE filter. Then, at Step s605, demodulator 206 performs demodulation to calculate code bit LLRs, and decoder 207 performs error correction decoding at Step s606. At Step s607, decoder 207 determines whether the process has been done a predetermined number of times, or whether any error has not been detected in the decoded result. When the process has been done a predetermined number of times, or when no error has been detected, information bits are output to complete the receiving process. When the process has not been performed a predetermined number of times and an error has been detected, the code bit LLR after decoding is output and the control goes to Step s608. Here, determination as to whether any error exists in the decoded result may be made by means of the MAC (Media Access Control) layer in the superior layer, for example. At Step s608, symbol replica generator 208 generates a symbol replica as a replica of a modulated symbol, from the code bit LLR. At s609, division-use replica generator 306 generates replica signals for performing multipath division using a symbol replica.

In this way, in the above first embodiment, ICI can be cancelled as a whole from all the subcarriers, it is hence possible to reduce the amount of calculation compared to the case where ICI is removed from each of the subcarriers. Further, when the multipath is divided into multiple blocks, it is possible to compensate for power loss of the delayed waves beyond the GI.

Though, in the above first embodiment, the signals for the other blocks are subtracted from the received signal, the present invention should not be limited to this. That is, it is possible to subtract a replica of the received signal from the received signal and then add the component that will not cause ICI.

[The Second Embodiment]

The second embodiment is the application of the present invention to an MIMO (Multiple Input Multiple Output) system. The following description will be given taking a case where the signal transmitted from a transmitting apparatus having T antennas is received by a receiving apparatus having R antennas.

FIG. 7 is a block diagram showing a configuration of a transmitting apparatus 700 in the second embodiment. Transmitting apparatus 700 includes coders 701-1 to 701-T, modulators 702-1 to 702-T, mapping units 703-1 to 703-T, IFFT units 704-1 to 704-T, GI inserting units 705-1 to 705-T, D/A converters 706-1 to 706-T, transmitting filter units707-1 to 707-T, radio units 708-1 to 708-T, a pilot generator 709 and transmitting antennas 710-1 to 710-T.

Coders 701-1 to 701-T perform error correction coding on information bits to generate code bits. Modulators 702-1 to 702-T map the code bits onto the modulation symbols. Mapping units 703-1 to 703-T map the pilot signal generated by pilot generator 709 and the modulation symbols. The mapped signals are frequency-time converted at IFFT units 704-1 to 704-T. GI inserting units 705-1 to 705-T insert guide intervals. D/A converters 706-1 to 706-T perform digital/analog conversion. Transmitting filter units707-1 to 707-T perform waveform shaping. Radio units 708-1 to 708-T performs conversion to the radio frequency. The output signals from radio units 708-1 to 708-T are transmitted from T transmitting antennas 710-1 to 710-T.

FIG. 8 is a block diagram showing a configuration of a receiving apparatus 800 in the second embodiment. Receiving apparatus 800 includes receiving antennas 801-1 to 801-R, radio units 802-1 to 802-R, receiving filter units 803-1 to 803-R, A/D converters 804-1 to 804-R, a signal detector 805, demodulators 806-1 to 806-T, decoders 807-1 to 807-T, symbol replica generators 808-1 to 808-T and a channel estimator 809.

The signals received at receiving antennas 801-1 are converted from the radio frequency to the baseband at radio units 802-1 to 802-R, waveform-shaped at receiving filter units 803-1 to 803-R, analog-digital converted at A/D converters 804-1 to 804-R and output as received signals. Signal detector 805 performs ISI and ICI suppression and MIMO signal separation, based on the received signal, symbol replicas generated by symbol replica generators 808-1 to 808-T and the channel estimate, estimated by channel estimator 809 from the received signal. The signals separated by MIMO signal separation are demodulated by demodulators 806-1 to 806-T to determined code bit LLRs. Decoders 807-1d to 807-T perform error correction decoding. If the decoded result is free from error or when a predetermined number of repetition have been performed, information bits are output. Otherwise, code bit LLRs are output to enter the repeatingprocess. Symbol replica generators 808-1 to 808-T generate symbol replicas from the code bit LLRs.

FIG. 9 is a block diagram showing a configuration of signal detector 805. Signal detector 805 includes an interference canceller 901 and a signal separator 902. Interference canceller 901 includes a replica subtractor 903, FFT units 904-1-1 to 904-1-$N_B$, ••• 904-R-1 to 90r-R-$N_B$, desired signal adders 905-1-1 to 905-1-$N_B$, •••, 905-R-1 to 905-R-$N_B$, and a received signal replica generator 906 (also called replica generator).

Replica subtractor 903 subtracts a received signal replica as the replica of the received signal, generated by received signal replica generator 906 from the symbol replica and channel estimate, from the received signals. At this time ISI cancellation is performed. The received signals with the replica subtracted are subjected to time-frequency transformation through FFT units 904-1-1 to 904-1-$N_B$, •••, 904-R-1 to 904-R-$N_B$ and then divided into multiple blocks of signals with ICI removed through desired signal adders 905-1-1 to 905-1-$N_B$, •••, 905-R-1 to 905-R-$N_B$. Signal separator 902 performs MIMO signal separation using the signals divided in blocks.

Next, the details of the process of signal detector 805 will be described.

The received signal vector in the first block of the i-th OFDM symbol is denoted as $r_{i,1}$ and the received vector in the second block of the i-th OFDM symbol is denoted as $r_{i,2}$. That is, $r_{i,1}$ is a signal that is given by arranging the received signals of the first block, received at individual receiving antennas in the vertical direction, whereas $r_{i,2}$ is a signal that is formed by arranging the received signals of the second block, received at individual receiving antennas, in the vertical direction. The signal that is obtained by subtracting the received signal replica from the received signal and Fourier-transforming the signal at every receiving antenna is denoted as the following expression (57).

[Math 24]

$$\mathbf{R}_i = \begin{pmatrix} \mathbf{R}_{i,1} \\ \mathbf{R}_{i,2} \end{pmatrix} = \begin{pmatrix} \mathbf{F}(\mathbf{r}_{i,1} - \hat{\mathbf{r}}_{i,1}) \\ \mathbf{F}(\mathbf{r}_{i,2} - \hat{\mathbf{r}}_{i,2}) \end{pmatrix} \quad \cdots (57)$$

Here, $R_{i,1}$ and $R_{i,2}$ denote a frequency signal vector of the cancellation residue of the first block and a frequency signal vector of the cancellation residue of the second block, respectively. Further, $r\^_{i,1}$ and $r\^_{i,2}$ represent a received signal replica of the first block and a received signal replica of the second block, respectively, and are given as the following expressions (58) and (59).

[Math 25]

$$\hat{\mathbf{r}}_{i,1} = \mathbf{H}_{c,1}^{1}\hat{\mathbf{z}}_i + \mathbf{H}_{c,2}^{1}\hat{\mathbf{z}}_i + \mathbf{H}_{s,-1}\hat{\mathbf{z}}_{i-1} + \mathbf{n}_i^{1} \quad \cdots (58)$$

$$\hat{\mathbf{r}}_{i,2} = \mathbf{H}_{c,2}^{2}\hat{\mathbf{z}}_i + \mathbf{H}_{c,1}^{2}\hat{\mathbf{z}}_i + \mathbf{H}_{s,+1}\hat{\mathbf{z}}_{i+1} + \mathbf{n}_i^{2} \quad \cdots (59)$$

Here, $H^1_{c,1}$, $H^1_{c,2}$, $H^2_{c,1}$, $H^2_{c,2}$, $H_{s,-1}$ and $H_{s,+1}$ are matrixes whose elements are expanded to R rows and T columns from the expressions (2), (3), (12), (13), (4) and (14) in the first embodiment, respectively. Further, $z^\wedge_i$, $z^\wedge_{i-1}$ and $z^\wedge_{i+1}$ are vectors which each are formed by arranging modulation symbols transmitted from individual antennas in the vertical direction. F and $F_I$ in the second embodiment represent Fourier transform and inverse Fourier transform for the signal at every receiving antenna and for the signal to be transmitted from every transmitting antenna, respectively.

Adding the signal that will not cause ICI to $R_i$ produces the received signal from which ICI was canceled.

[Math 26]

$$\tilde{\mathbf{R}}_i = \mathbf{R}_i + \mathbf{X}_{\mathrm{d}}\hat{z}_i \quad \cdots (60)$$

Here, $X_d$ is given by the following expression (61).

[Math 27]

$$\mathbf{X}_{\mathrm{d}} = \begin{pmatrix} \mathrm{bdiag}\left(\mathbf{F}(\mathbf{H}_{c,1}^{1} + \mathbf{H}_{c,2}^{1})\right) \\ \mathrm{bdiag}\left(\mathbf{F}(\mathbf{H}_{c,1}^{2} + \mathbf{H}_{c,2}^{2})\right) \end{pmatrix} \quad \cdots (61)$$

Here, bdiag(A) represents a matrix having block diagonal components of matrix A with the other elements equal to zero. In expression (61), R-row, T-column matrixes for every subcarrier are arranged diagonally. This block diagonal components will not cause any ICI. The elements of $R^\sim_i$ are the outputs from desired signal adders 905-1-1 to 905-1-$N_B$, •••, 905-R-1 to 905-R-$N_B$.

Here, when both the number of transmitting antennas and the number of receiving antennas are 1, $R^\sim_i$ in expression (33) of the first embodiment and $R^\sim_i$ in expression (60) of the second embodiment will produce the same result if the same symbol replica is used. The difference is only that extraction of the desired signal is performed by subtracting the replica of the undesired signal or extraction is performed by subtracting the replica of all the signals including the desired signal and then adding the replica of the desired signal. Also in the present embodiment, it is naturally possible to perform the same process as that of the first embodiment.

Signal separator 902 performs MIMO separation detection on $R^\sim_i$. MIMO separation detection may employ, for example, ZF (Zero-Forcing), MMSE, MLD (Maximum Likelihood Detection) and the like as long as it can be applied to MIMO-OFDM. Here, since code bit LLRs have been obtained by the decoding process, MLD can perform MIMO separation detection by using a MAP (Maximum A posteriori Probability) algorithm.

MIMO separation detection for every subcarrier will be described. Of the input signals to signal separator 902, the n-th subcarrier is represented as the following expression (62).

[Math 28]

$$\widetilde{\mathbf{R}}_{i,n} \cong (\mathbf{X}_{\mathrm{d}})_n \mathbf{z}_{i,n} + \mathbf{N}_n \quad \cdots (62)$$

Here, $N_n$ is the sum of ISI cancellation residue, ICI cancellation residue and noise in the n-th subcarrier. In this case, since the number of multipath division is 2, $(X_d)_n$ forms a 2R-row, T-column matrix. When MIMO separation detection is performed on expression (62) by MMSE, this can be done as in the following expressions (63) and (64)

[Math 29]

$$\hat{\mathbf{z}}_{i,n} = \mathbf{W}_n^H \widetilde{\mathbf{R}}_{i,n} \quad \cdots (63)$$

$$\mathbf{W}_n = (\mathbf{X}_{\mathrm{d}})_n \left( (\mathbf{X}_{\mathrm{d}})_n^H (\mathbf{X}_{\mathrm{d}})_n + \sigma_N^2 \mathbf{I}_T \right)^{-1} \cdots (64)$$

Here, $z\hat{}_{i,n}$ is $z_{i,n}$ after MIMO separation detection, $\sigma_N{}^2$ is the average power of the sum of the cancellation residue and noise, $I_T$ is the T-row, T-column unit matrix.

When MIMO separation detection is performed by MLD for example, this can be done as in the following expression (65).

[Math 30]

$$\hat{\mathbf{z}}_{i,n} = \underset{\mathbf{z}_{c,i,n}}{\arg\min} \left\| \widetilde{\mathbf{R}}_{i,n} - (\mathbf{X}_{\mathrm{d}})_n \mathbf{z}_{c,i,n} \right\|^2 \quad \cdots (65)$$

Here, $z_{c,i,n}$ is a candidate of $z_{i,n}$, and there exist $4^T$ candidates for QPSK and $16^T$ candidates for 16QAM. It is also possible to reduce the number of $z_{c,i,n}$ so as to cut down the amount of computation.

FIG. 10 is a flow chart of the receiving process in the second embodiment.

This receiving process is implemented in receiving apparatus 200. The signals received by receiving antennas 801-1 to 802-R pass through radio units 802-1 to 802-R, receiving filter units 803-1 to 803-R, A/D converters 804-1 to 804-R, are digital/analog converted and output as received signals, as described above. The following flow starts from the step at which the received signals are processed by signal detector 805.

At Step s1001, replica subtractor 903 subtracts the received signal replica generated by received signal replica generator 906 at Step s1009, from the received signals. Then at Step s1002, FFT units 904-1-1 to 904-1$N_B$, •••, 904-R-1 to 904-R-$N_B$ convert the signals into the frequency domain. At Step s1003, desired signal adders 905-1-1 to 905-1-$N_B$, •••, 905-R-1 to 905-R-$N_B$ add a component that will not bring about ICI to each block divided from the multipath, to perform ICI cancellation as a whole for all the subcarriers of each block. At Step s1004, signal separator 902 performs MIMO separation detection using the signals with the ICI removed. At Step s1005, demodulators 806-1 to 806-T calculate code bit LLRs by decoding the signals after separation detection. At Step s1006, decoders 807-1 to 807-T perform error correction decoding on the code bit LLRs. At Step s1007, it is determined whether the decoding process has been done a predetermined number of times, or whether any error has been detected in the decoded result. When the process has been done a predetermined number of times, or when no error has been detected, information bits are output to complete the receiving process. When no error has been detected and when the process has not been performed a predetermined number of times and, the code bit LLRs obtained by decoding are output and the control goes to Step s1008. At Step s1008, symbol replica generators 801-1 to 808-T generate symbol replicas as the replicas of the modulation symbols from the code bit LLRs. At Step s1009, received signal replica generator 906 generates a received signal replica as the replica of the received signal, based on the symbol replicas. Then, once again, the process at Step s1001 is performed.

Though the present embodiment has been described on the assumption that different pieces of data are transmitted from different transmitting antennas. However, the present invention should not be limited this, but can be applied to cases where a multiple pieces of different data lower than the number of the transmitting antennas are transmitted.

Further, though in the present embodiment, error correction coding is implemented for each of different pieces of data, the present invention should be limited to this, but code bits may be allotted to multiple transmitting antennas. In this case, on the reception side, the distributed signals will be subjected to error correction decoding by a single decoder.

(The Third Embodiment)

In the present embodiment, a method of suppressing interference from other transmitting antennas in addition to dividing multipath will be described.

Since the difference from the second embodiment is the process of signal detector 805, description will be made on only the process at signal detector 805. In the third embodiment, since interference from other transmitting antennas are also suppressed, the signals added at desired signal adders 905-1-1 to 905-1-$N_B$, •••, 905-R-1 to 905-R-$N_B$, are the replica of a signal transmitted from the desired transmitting antenna t. Accordingly, the signal input to signal separator 902 is given as expression (66).

[Math 31]

$$\tilde{\mathbf{R}}_{i,t} = \mathbf{R}_i + \mathbf{X}_\mathbf{d}\hat{\mathbf{z}}_{i,t} \quad \cdots (66)$$

Here, $\hat{z}_{i,t}$ is $\hat{z}_i$ with the other signals than that transmitted from the t-th antenna set equal to zero. Here, 1≤t≤T.

MIMO separation detection for every subcarrier will be described. Of the input signals to signal separator 902, the n-th subcarrier is represented as the following expression (67).

[Math 32]

$$\tilde{\mathbf{R}}_{i,n,t} \cong (\mathbf{X}_\mathrm{d})_n \mathbf{z}_{i,n,t} + \mathbf{N}_n \quad \cdots (67)$$

Here, $z_{i,n,t}$ is a vector with the t-th element of $z_{i,n}$ and the others set with cancellation residues. Signal separator 902 detects the signal transmitted from the t-th transmitting antenna, from $\tilde{R}_{i,n,t}$. For example, MMSE weights may be used as shown in expression (64) described in the second embodiment. It is also possible to perform synthesis similar to the first embodiment, by assuming that interference from the other antennas could be completely removed. Further, such MMSE weights as to suppress interference cancellation residues form other transmitting antennas to synthesize a desired stream may be used. Signal detector 805 performs the same process for all t.

FIG. 11 is a flow chart of the receiving process in the third embodiment.
This receiving process is implemented in receiving apparatus 200 similarly to the second embodiment. The signals received by receiving antennas 801-1 to 802-R pass through radio units 802-1 to 802-R, receiving filter units 803-1 to 803-R and A/D converters 804-1 to 804-R, are digital/analog converted and output as the received signals, as described above. The following flow starts from the step at which the received signals are processed by signal detector 805.

At Step s1101, replica subtractor 903 subtracts the received signal replica generated by received signal replica generator 906 at Step s1109 from the received signals. Then at Step s1102, FFT units 904-1-1 to 904-1$N_B$, •••, 904-R-1 to 904-R-$N_B$ convert the signals into the frequency domain. At Step s1103, desired signal adders 905-1-1 to 905-1-$N_B$, •••, 905-R-1 to 905-R-$N_B$ add the component that will not bring about ICI, of the signal transmitted from the desired antenna, to suppress ICI and interference from other antennas. Then, at Step s1104, signal separator 902 performs MIMO separation detection. At Step s1105, demodulators 806-1 to 806-T perform demodulation. At Step s1106, decoder 807-1 to 807-T perform decoding. At Step s1107, it is determined whether the decoding process has been done a predetermined number of times, or whether any error has been detected in the decoded result. When the process has been done a predetermined number of times, or when no error has been detected, information bits are output to complete the receiving process. When an error has been detected and when the process has not been performed a predetermined number of times, the code bit LLRs are output and the control goes to Step s1108. At Step s1108, symbol replica generators 801-1 to 808-T generate symbol replicas from the code bit LLRs. At Step s1109, received signal replica generator 906 generates a received signal replica, based on the symbol replicas. Then, the control once again to Step s1101.

(The Fourth Embodiment)

The present embodiment will be described taking an example in which the present invention is applied to a receiving apparatus in a relay system.

FIG. 12 shows a schematic diagram of a relay system 1200 in the present embodiment. Relay system 1200 includes a transmitting apparatus 1201, a relaying apparatus 1202 and a receiving apparatus 1203. Receiving apparatus 1203 is assumed to receive both the relayed signal transmitting from transmitting apparatus 1201 by way of relaying apparatus 1202 and the direct signal without passage of relaying apparatus 1202. Relaying apparatus 1202 performs an AF (Amplify-and-forward) relaying process, by which the received signal is amplified and forwarded.

When, in relaying processing, a processing delay occurs and if the processing delay exceeds the GI length, clusters of delayed waves as shown in FIG. 13 arrive. FIG. 13 shows one example of a delay profile of a relay system. A cluster of delayed waves 1301 is a delay profile between the transmitting apparatus and the receiving apparatus. A cluster of delayed waves 1302 is a delay profile when the waves travel by way of the relaying apparatus. When a delay of the relaying process exceeds the GI length, it produces an environment in which a relayed signal having a relatively high power arrives as a cluster of delayed waves.

FIG. 14 is a block diagram showing a configuration of the receiving apparatus of the present embodiment. The receiving apparatus includes a receiving antenna 1401, a radio unit 1402, a receiving filter unit 1403, an A/D converter 1404, a signal detector 1405, a demodulator 1406, a decoder 1407, a symbol replica generator 1408, a channel estimator 1409 and a division setter 1410.

Since the difference from the first embodiment is provision of division setter 1410, description will be made on division setter 1410 alone. Division setter 1410 sets the FFT starting position (range) of each block. For example, when the processing delay of the relaying apparatus is greater than the GI length, two clusters of delayed waves appear, so that the FFT starting position may be set based on the front position of each cluster of delayed waves. If the spread of delay within the cluster of delayed waves exceed the GI length, the cluster may be further divided. When either the direct signal or the relayed signal is extremely weak, the signal in question may be unused. When a further delay occurs as in multi-hop transmission, two or more clusters of delayed waves appear, so that the FFT starting position may be set on the basis of the front position of each cluster of delayed waves.

In signal detector 1405, multipath division and synthesis are performed in accordance with the FFT starting position set by division setter 1410.

Though the present embodiment was described taking a case where delayed waves exceeding the GI are received when the signal is received by way of a relay system, the embodiment can be applied to a case where delayed waves exceeding the GI arise when signals from multiple base stations are received simultaneously (e.g., CoMP (Cordinated Multi-Points)).

Though in the above first to fourth embodiments, the channel estimator performs channel estimation based on the pilot signal, the present invention should not be limited to this. The received data may also be used to perform channel estimation. For example, it is possible to perform channel estimation repeatedly by using code bit LLRs output from the decoder.

Description of Reference Numerals

| | |
|---|---|
| 100 | transmitting apparatus |
| 101 | coder |
| 102 | modulator |
| 103 | mapping unit |
| 104 | IFFT unit |

| | |
|---|---|
| 105 | GI inserting unit |
| 106 | D/A converter |
| 107 | transmitting filter unit |
| 108 | radio unit |
| 109 | pilot generator |
| 110 | transmitting antenna |
| 200 | receiving apparatus |
| 201 | receiving antenna |
| 202 | radio unit |
| 203 | receiving filter unit |
| 204 | A/D converter |
| 205 | signal detector |
| 206 | demodulator |
| 207 | decoder |
| 208 | symbol replica generator |
| 209 | channel estimator |
| 301 | interference canceller |
| 302 | synthesizer |
| 303 | multipath divider |
| 304-1 to 304$N_B$ | FFT units |
| 305-1 | to 305$N_B$ desired signal adders |
| 306 | division-use replica generator |
| 700 | Transmitting apparatus |
| 701-1 to 701-T | coders |
| 702-1 to 702-T | modulators |
| 703-1 to 703-T | mapping units |
| 704-1 to 704-T | IFFT units |
| 705-1 to 705-T | GI inserting units |
| 706-1 to 706-T | D/A converters |

| | |
|---|---|
| units707-1 to 707-T | transmitting filter units |
| 708-1 to 708-T | radio units |
| 709-1 to 709-T | pilot generators |
| 710-1 to 710-T | transmitting antennas |
| 800 | receiving apparatus |
| 801-1 to 801-R | receiving antennas |
| 802-1 to 802-R | radio units |
| 803-1 to 803-R | receiving filter units |
| 804-1 to 804-R | A/D converters |
| 805 | signal detector |
| 806-1 to 806-T | demodulators |
| 807-1 to 807-T | decoders |
| 808-1 to 808-T | symbol replica generators |
| 809 | channel estimator |
| 901 | interference canceller |
| 902 | signal separator |
| 903 | replica subtractor |
| 904-1-1 to 904-R-$N_B$ | FFT units |
| 905-1-1 to 905-R-$N_B$ | desired signal adders |
| 906 | received signal replica generator |
| 1200 | relay system |
| 1201 | transmitting apparatus |
| 1202 | relaying apparatus |
| 1203 | receiving apparatus |
| 1301, | 1302clusters of delayed waves |
| 1401 | receiving antenna |
| 1402 | radio unit |
| 1403 | receiving filter unit |
| 1404 | A/D converter |

| | |
|---|---|
| 1405 | signal detector |
| 1406 | demodulator |
| 1407 | decoder |
| 1408 | symbol replica generator |
| 1409 | channel estimator |
| 1410 | division setter |

## Claims

**1.** A receiving apparatus for receiving signals based on a multicarrier transmission system, comprising:

a decoder for calculating bit likelihood by error correction decoding;
a symbol replica generator for generating a symbol replica based on the bit likelihood;
a channel estimator for calculating a channel estimate by channel estimation; and,
a signal detector for reducing multipath interference, **characterized in that** the signal detector includes:

an interference canceller for canceling inter carrier interference as a whole, based on the channel estimate and the symbol replicas; and
a combiner for combining the outputs from the interference canceller.

**2.** The receiving apparatus according to Claim 1, wherein the interference canceller includes:

a division-use replica generator for generating a division-use replica using part of the channel estimate;
a multipath divider for performing multipath division by subtracting the division-use replicas from a received signal;
an FFT unit for generating a frequency domain signal by performing Fourier transform on the signals obtained by multipath division; and
a desired signal adder for adding a component of the division-use replica that will not cause inter carrier interference, to the frequency domain signal.

**3.** The receiving apparatus according to Claim 1, wherein the interference canceller includes:

a received signal replica generator for generating a replica of a received signal using the channel estimate;
a replica subtractor for subtracting the replica of the received signal from the received signal;
an FFT unit for generating multiple frequency domain signals by performing Fourier transform on the signals with the replica subtracted, in different intervals; and,
a desired signal adder for adding a component that will not cause inter carrier interference, to the multiple frequency domain signals.

**4.** The receiving apparatus according to any one of Claims 1 to 3, wherein the combiner combines the outputs from the interference canceller on a minimum mean square error basis, based on the bit likelihood.

**5.** A receiving method of receiving a signal based on a multicarrier transmission system, comprising:

a decoding step of calculating bit likelihood by error correction decoding;
a symbol replica generating step of generating a symbol replica based on the bit likelihood;
a channel estimating step of calculating a channel estimate by channel estimation; and,
a signal detecting step of reducing multipath interference, **characterized in that** the signal detecting step includes:

an interference canceling step of canceling inter carrier interference as a whole, based on the channel estimate and the symbol replicas; and

a combining step of combining the outputs from the interference canceller.

6. The receiving method according to Claim 5, wherein the decoding step and the signal detecting step are iteratively performed.

7. A receiving apparatus for receiving signals based on a MIMO transmission system, comprising:

   a decoder for calculating bit likelihood by error correction decoding;
   a symbol replica generator for generating a symbol replica based on the bit likelihood;
   a channel estimator for calculating a channel estimate by channel estimation; and,
   a signal detector for reducing multipath interference, **characterized in that** the signal detector includes:

      an interference canceller for canceling inter carrier interference as a whole, based on the channel estimate and the symbol replicas; and
      a signal separator for performing MIMO signal separation on the output from the interference canceller.

8. The receiving apparatus according to Claim 7, wherein the interference canceller includes:

   a division-use replica generator for generating a division-use replica using part of the channel estimate;
   a multipath divider for performing multipath division by subtracting the division-use replica from a received signal;
   an FFT unit for generating a frequency domain signal by performing Fourier transform on the signals obtained by multipath division; and
   a desired signal adder for adding a component of the division-use replica that will not cause inter carrier interference, to the frequency domain signal.

9. The receiving apparatus according to Claim 7, wherein the interference canceller includes:

   a received signal replica generator for generating a replica of a received signal using the channel estimate;
   a replica subtractor for subtracting the replica of the received signal from the received signal;
   an FFT unit for generating multiple frequency domain signals by performing Fourier transform on the signals with the replica subtracted, in different intervals; and,
   a desired signal adder for adding a component that will not cause inter carrier interference, to the multiple frequency domain signals.

10. The receiving apparatus according to any one of Claims 7 to 9, wherein the signal separator performs MIMO signal separation by generating weights based on the channel estimate and multiplying the weights on received signals.

11. The receiving apparatus according to any one of Claims 7 to 9, wherein the signal separator performs MIMO signal separation by maximum likelihood detection.

12. The receiving apparatus according to any one of Claims 7 to 11, wherein the signal detector reduces multipath interference and inter stream interference.

13. A receiving method of receiving signals based on a MIMO transmission system, comprising:

   a decoding step of calculating bit likelihood by error correction decoding;
   a symbol replica generating step of generating a symbol replica based on the bit likelihood;
   a channel estimating step of calculating a channel estimate by channel estimation; and,
   a signal detecting step of reducing multipath interference, **characterized in that** the signal detecting step includes:

      an interference canceling step of canceling inter carrier interference as a whole, based on the channel estimate and the symbol replicas; and
      a signal separating step of performing MIMO signal separation on the output from the interference canceller.

14. The receiving method according to Claim 13, wherein the decoding step and the signal detecting step are iteratively performed.

FIG. 1

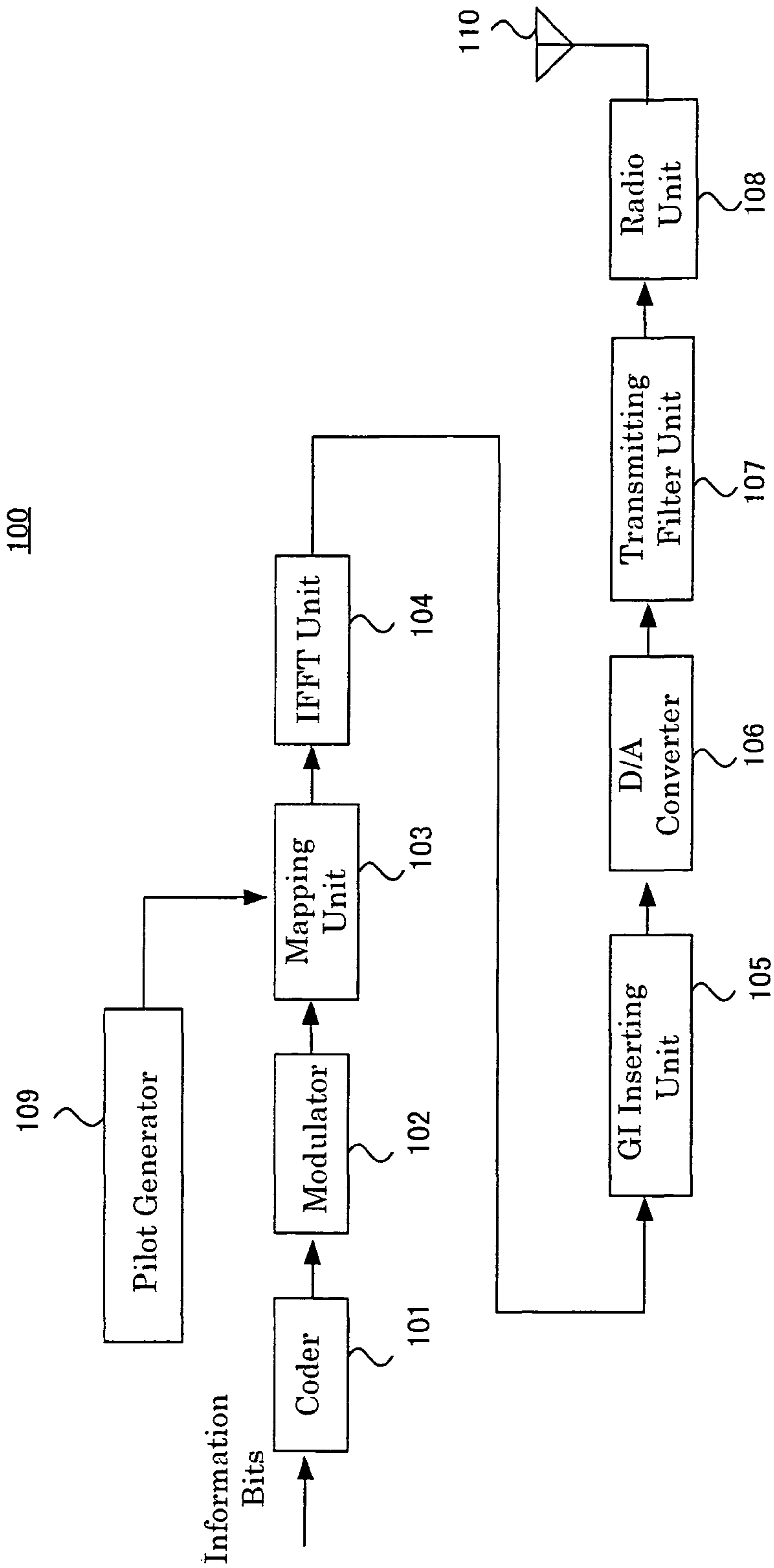
100
Information Bits
Coder
101
Modulator
102
Mapping Unit
103
IFFT Unit
104
Pilot Generator
109
GI Inserting Unit
105
D/A Converter
106
Transmitting Filter Unit
107
Radio Unit
108
110

FIG. 2

200

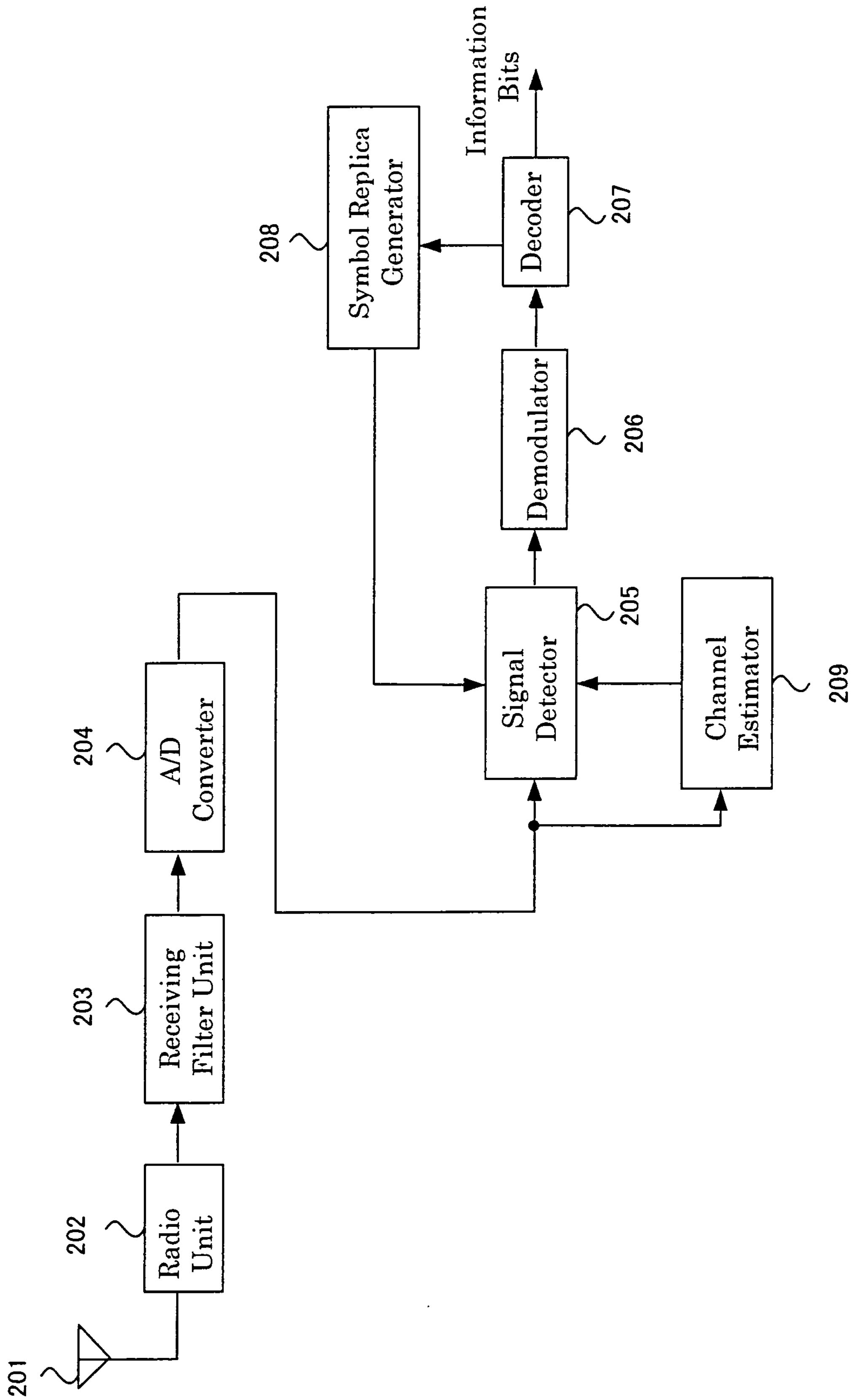

201
202
Radio Unit
203
Receiving Filter Unit
204
A/D Converter
205
Signal Detector
206
Demodulator
207
Decoder
208
Symbol Replica Generator
209
Channel Estimator
Information Bits

FIG. 3

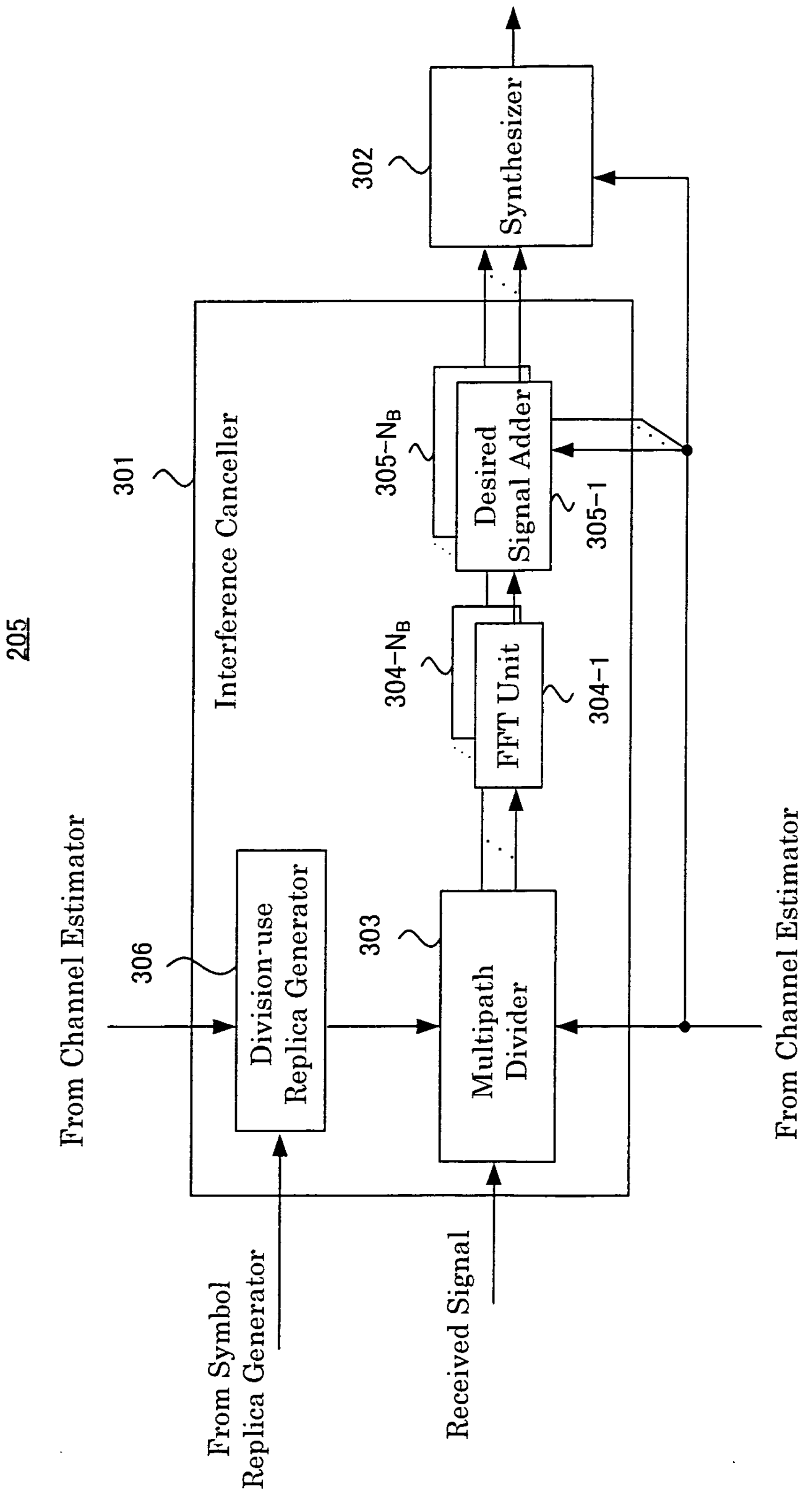
205
301
Interference Canceller
306
Division-use Replica Generator
303
Multipath Divider
304-1
304-NB
FFT Unit
305-1
305-NB
Desired Signal Adder
302
Synthesizer
From Channel Estimator
From Symbol Replica Generator
Received Signal
From Channel Estimator

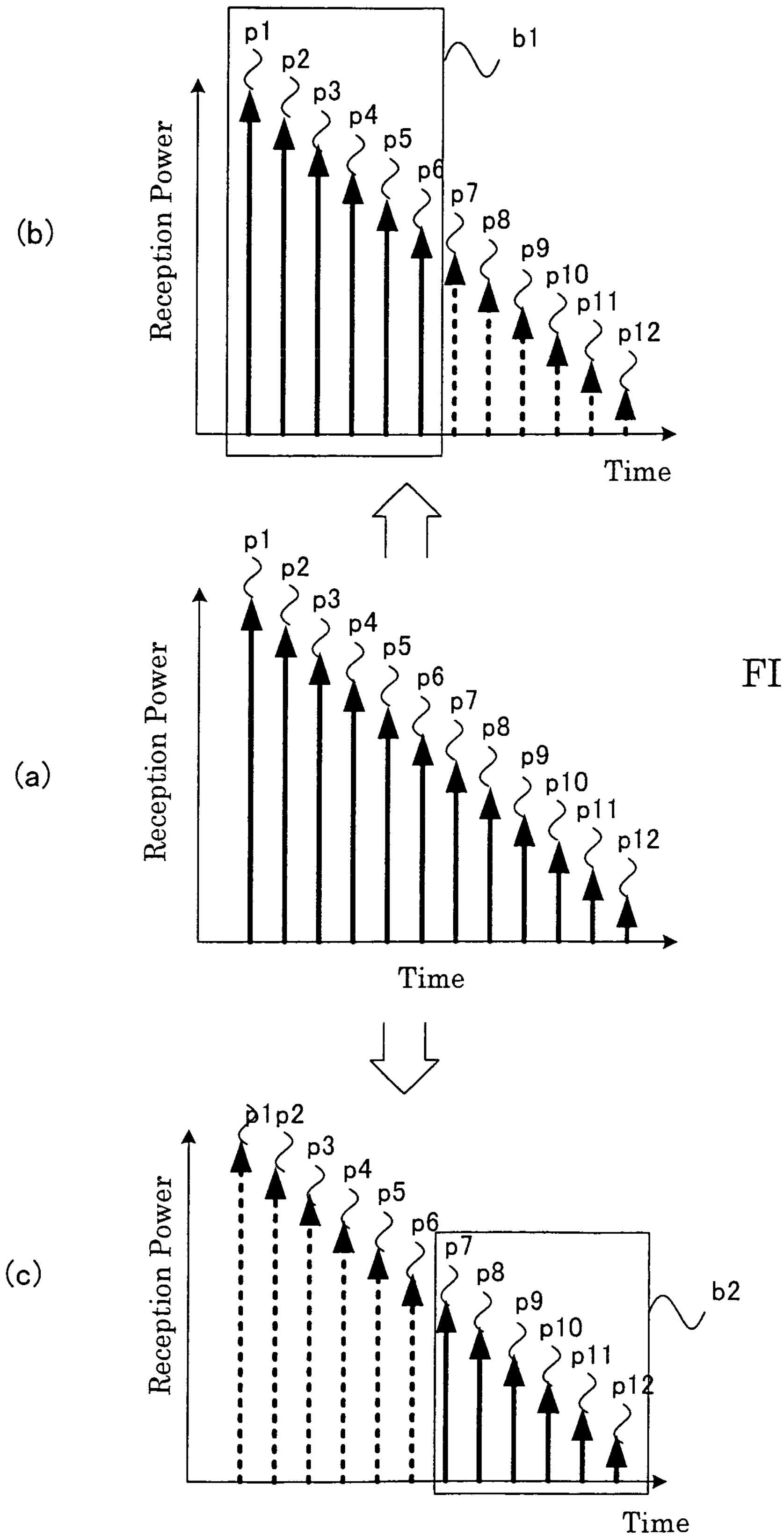
(b)
Reception Power
Time
p1
p2
p3
p4
p5
p6
p7
p8
p9
p10
p11
p12
b1
(a)
Reception Power
Time
p1
p2
p3
p4
p5
p6
p7
p8
p9
p10
p11
p12
(c)
Reception Power
Time
p1
p2
p3
p4
p5
p6
p7
p8
p9
p10
p11
p12
b2

FIG. 4

FIG. 5

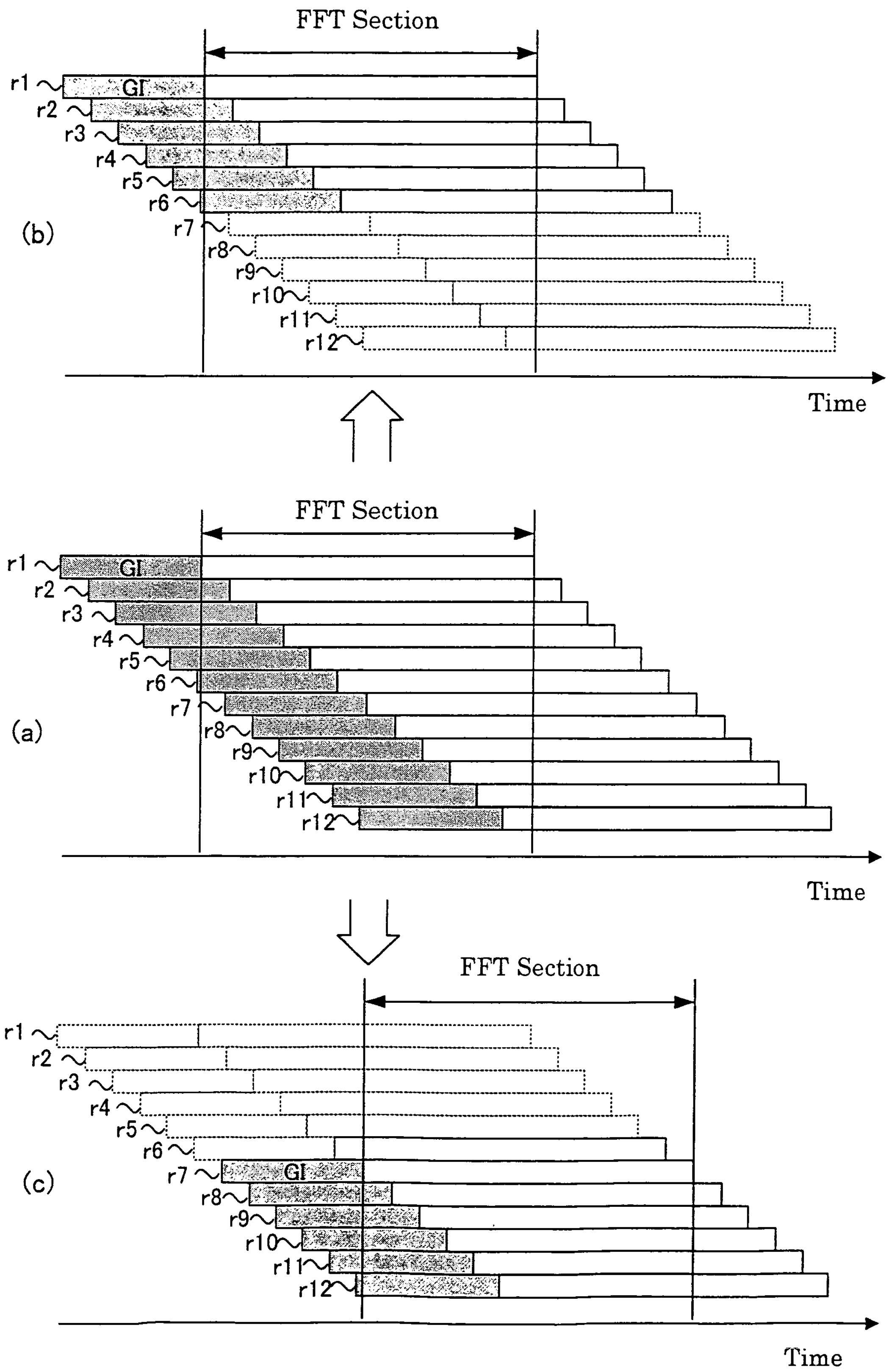
FFT Section
r1
GI
r2
r3
r4
r5
r6
r7
r8
r9
r10
r11
r12
(b)
Time
FFT Section
r1
GI
r2
r3
r4
r5
r6
r7
r8
r9
r10
r11
r12
(a)
Time
FFT Section
r1
r2
r3
r4
r5
r6
r7
GI
r8
r9
r10
r11
r12
(c)
Time

FIG. 6

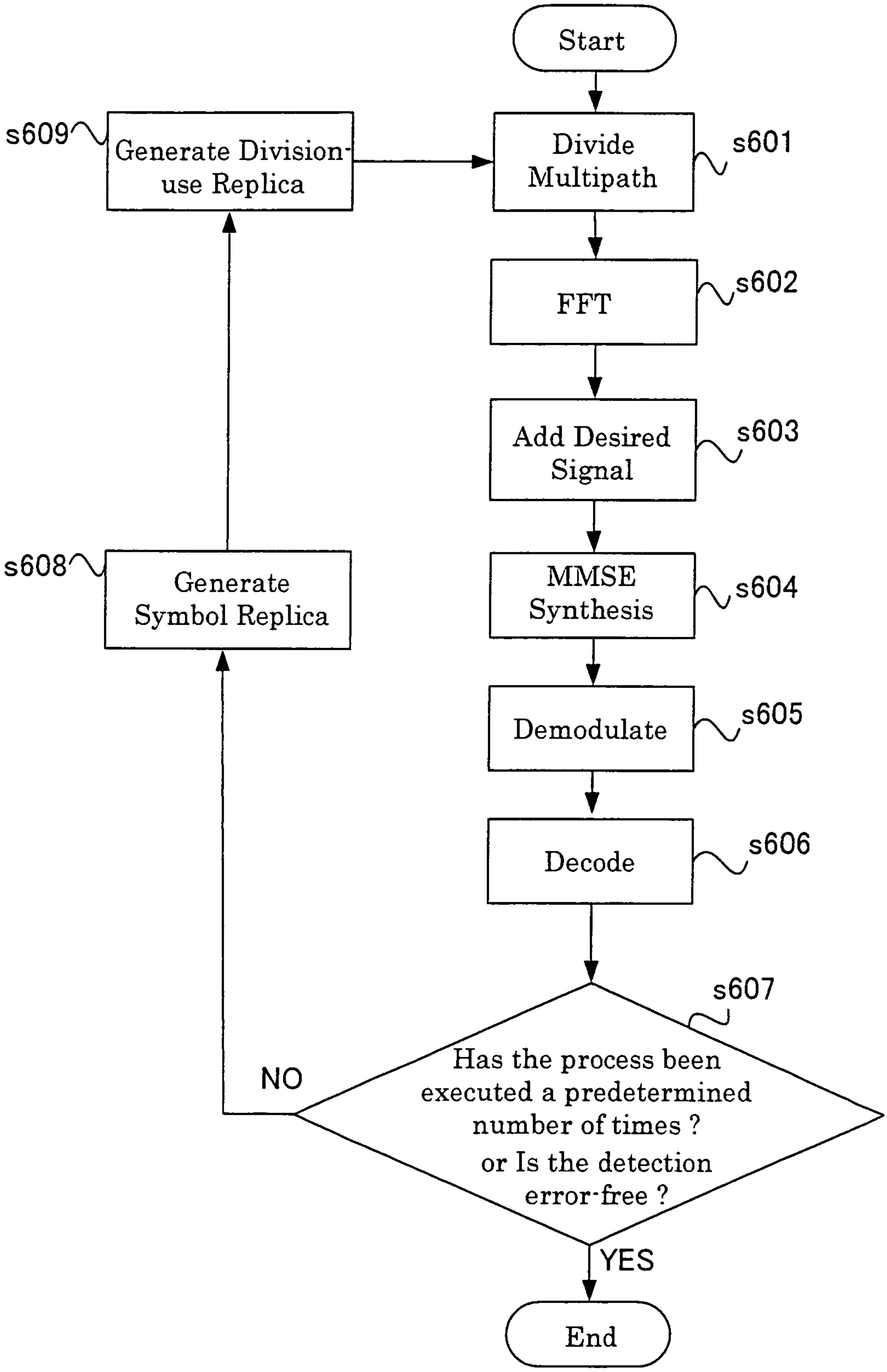
Start
Divide Multipath
s601
FFT
s602
Add Desired Signal
s603
MMSE Synthesis
s604
Demodulate
s605
Decode
s606
s607
Has the process been executed a predetermined number of times ? or Is the detection error-free ?
NO
YES
End
s608
Generate Symbol Replica
s609
Generate Division-use Replica

FIG. 7

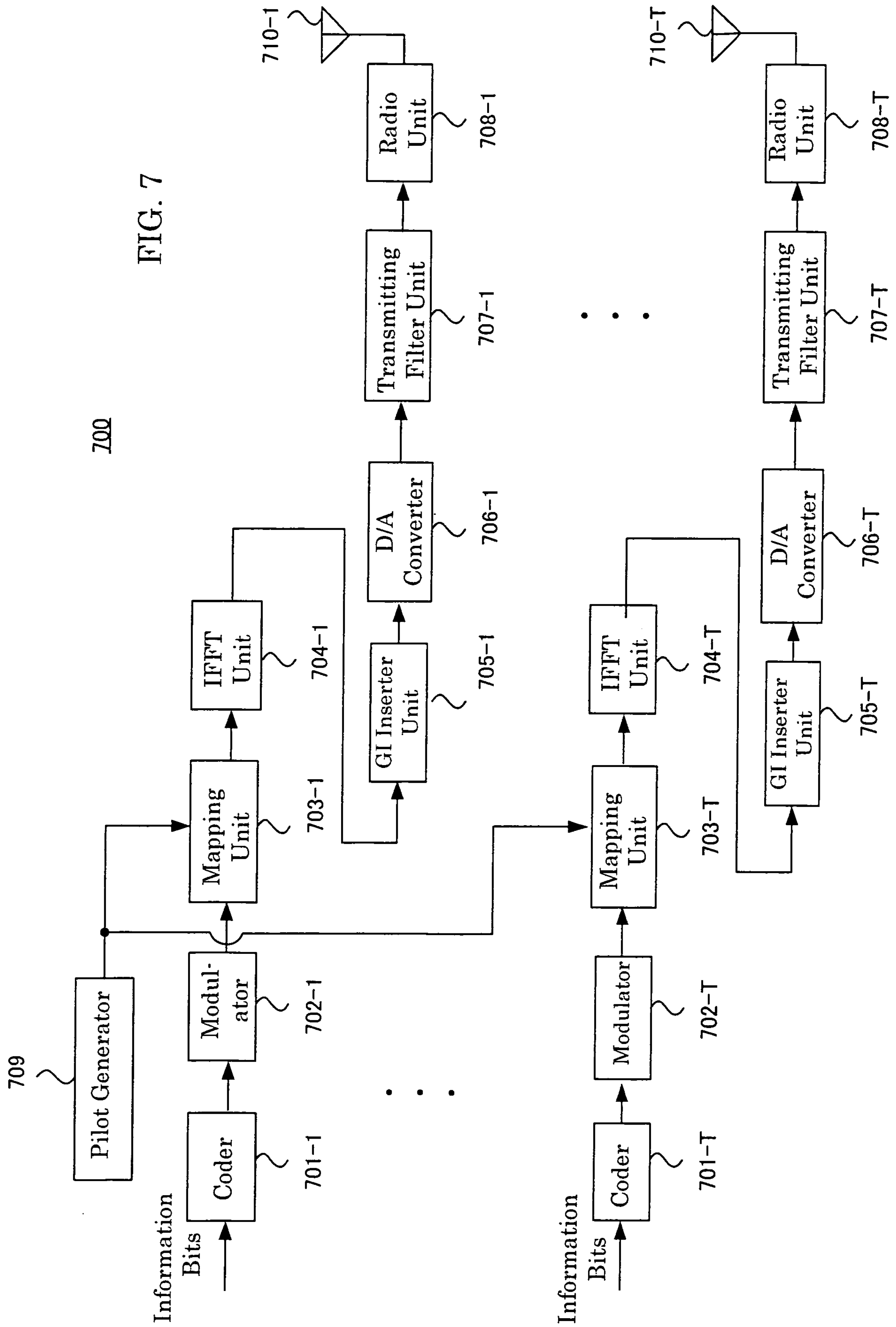
700
Information Bits
Coder
701-1
Modul-ator
702-1
Pilot Generator
709
Mapping Unit
703-1
IFFT Unit
704-1
GI Inserter Unit
705-1
D/A Converter
706-1
Transmitting Filter Unit
707-1
Radio Unit
708-1
710-1
Information Bits
Coder
701-T
Modulator
702-T
Mapping Unit
703-T
IFFT Unit
704-T
GI Inserter Unit
705-T
D/A Converter
706-T
Transmitting Filter Unit
707-T
Radio Unit
708-T
710-T

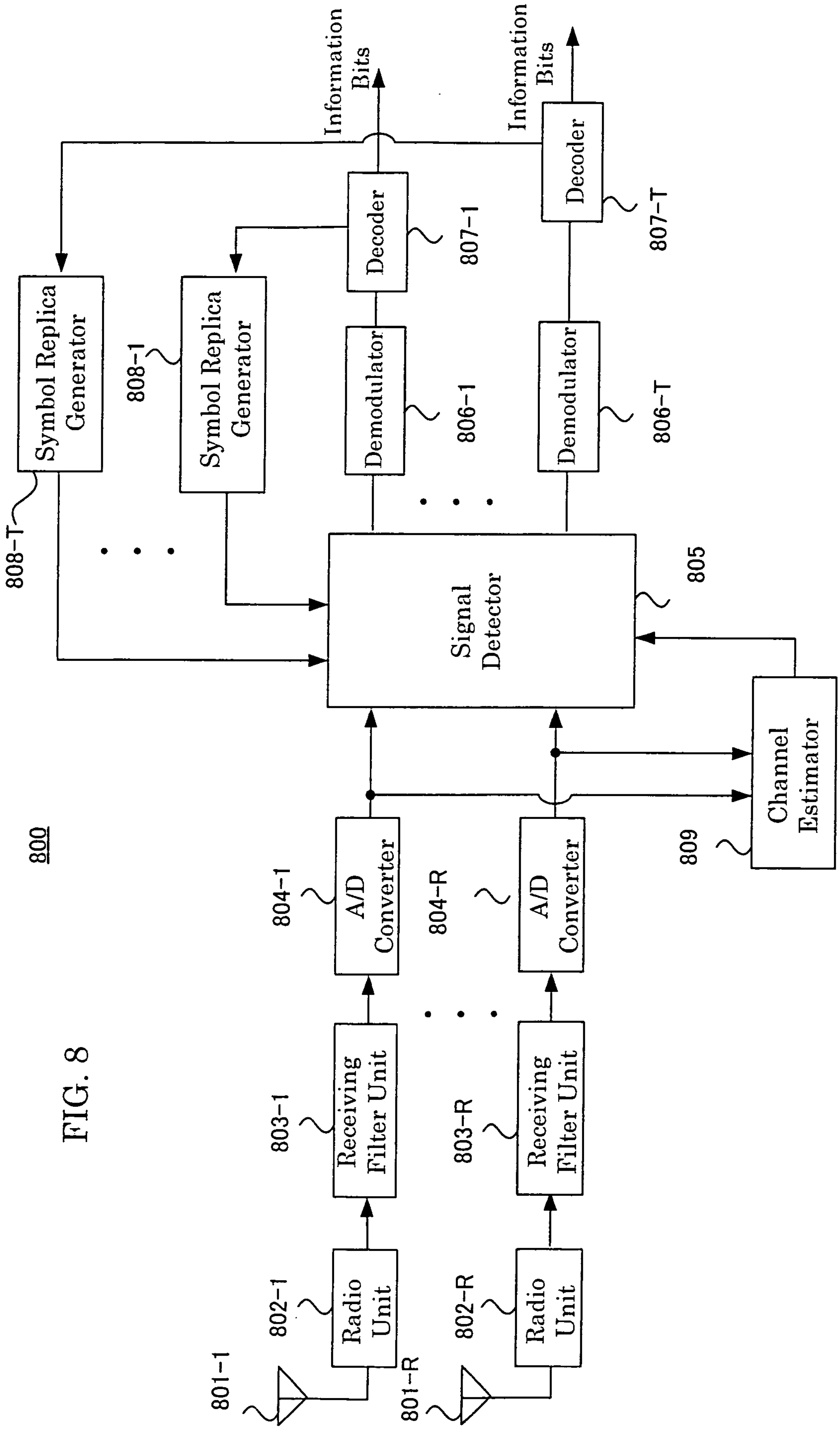
800
801-1
801-R
802-1
802-R
Radio Unit
Radio Unit
803-1
803-R
Receiving Filter Unit
Receiving Filter Unit
804-1
804-R
A/D Converter
A/D Converter
805
Signal Detector
806-1
806-T
Demodulator
Demodulator
807-1
807-T
Decoder
Decoder
Information Bits
Information Bits
808-1
808-T
Symbol Replica Generator
Symbol Replica Generator
809
Channel Estimator

FIG. 8

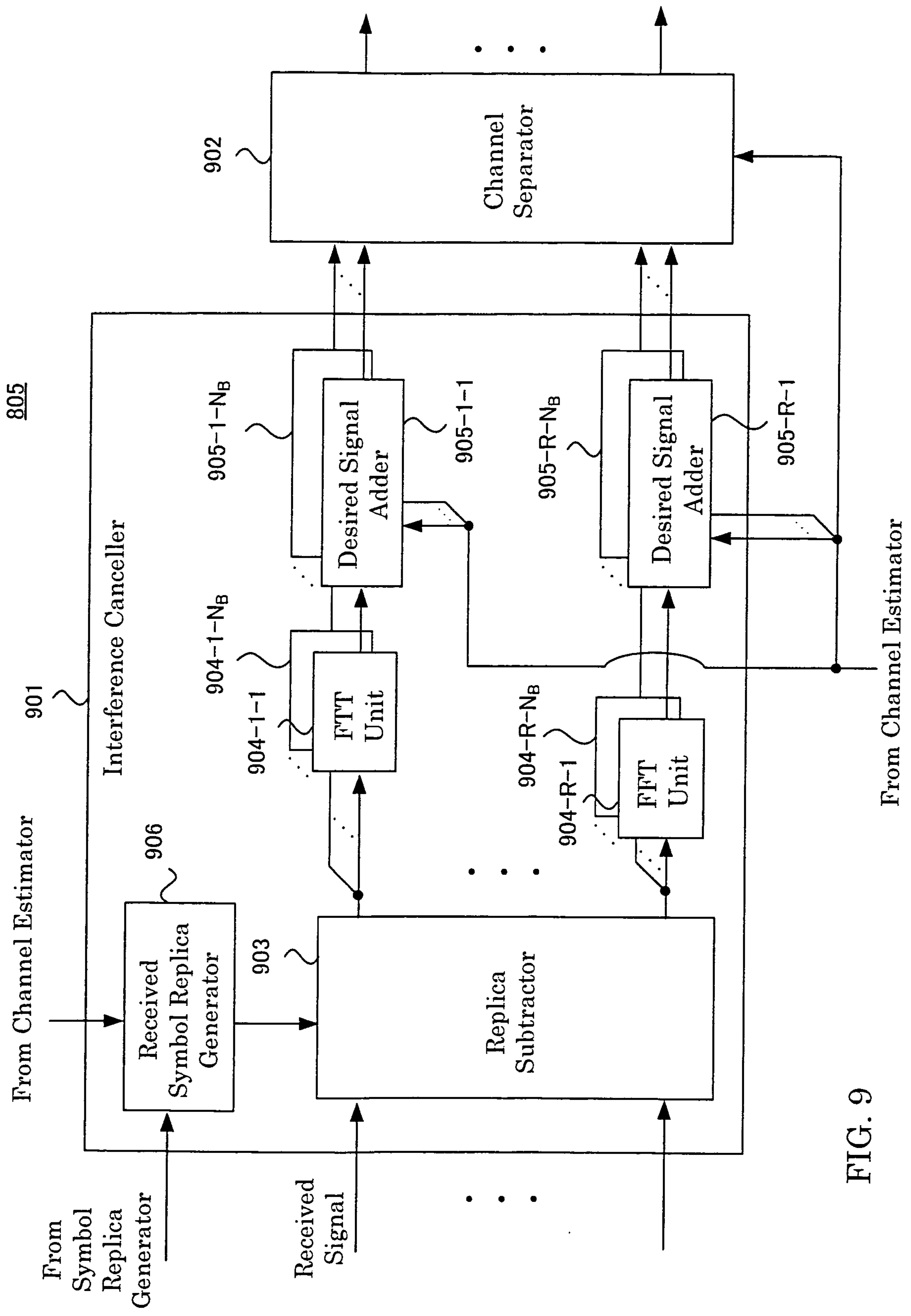
805
901
Interference Canceller
From Channel Estimator
906
Received Symbol Replica Generator
903
Replica Subtractor
904-1-1
904-1-$N_B$
FTT Unit
904-R-1
904-R-$N_B$
FFT Unit
905-1-1
905-1-$N_B$
Desired Signal Adder
905-R-1
905-R-$N_B$
Desired Signal Adder
902
Channel Separator
From Channel Estimator
From Symbol Replica Generator
Received Signal

FIG. 9

FIG. 10

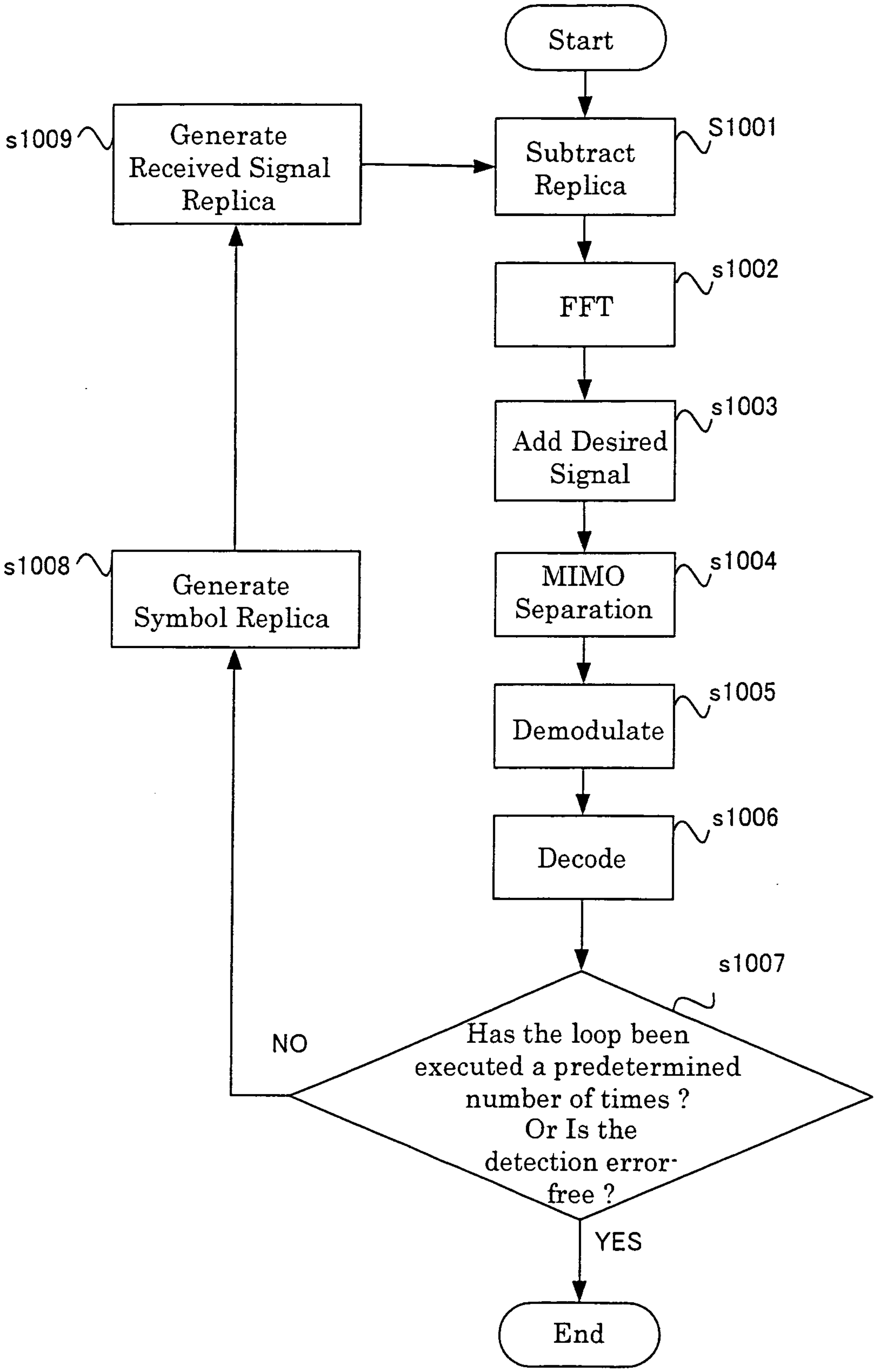
Start
s1009
Generate Received Signal Replica
S1001
Subtract Replica
s1002
FFT
s1003
Add Desired Signal
s1008
Generate Symbol Replica
s1004
MIMO Separation
s1005
Demodulate
s1006
Decode
s1007
NO
Has the loop been executed a predetermined number of times ? Or Is the detection error-free ?
YES
End

FIG. 11

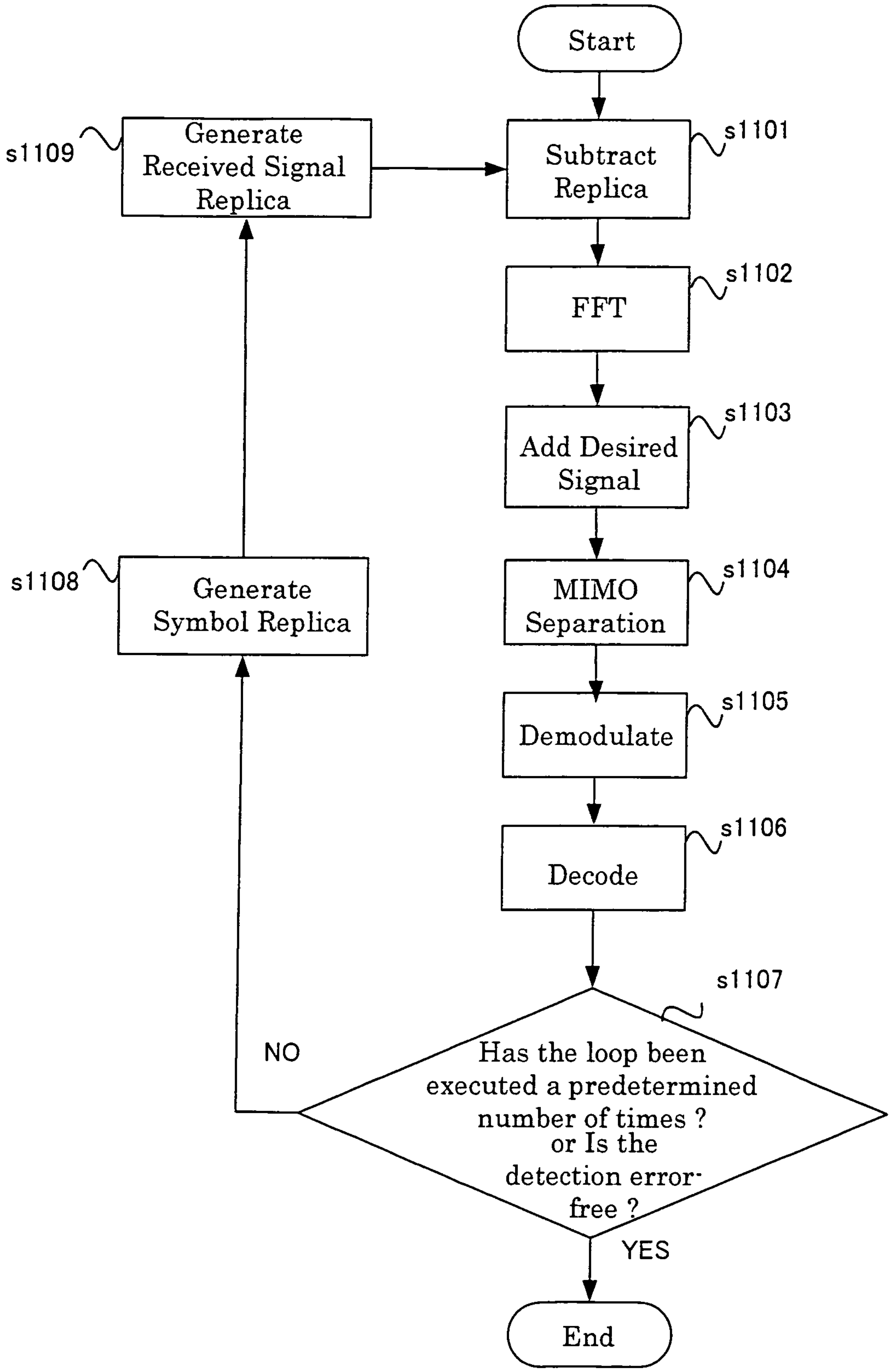
Start
Subtract Replica
s1101
FFT
s1102
Add Desired Signal
s1103
MIMO Separation
s1104
Demodulate
s1105
Decode
s1106
s1107
Has the loop been executed a predetermined number of times ? or Is the detection error-free ?
YES
NO
End
Generate Symbol Replica
s1108
Generate Received Signal Replica
s1109

FIG. 12

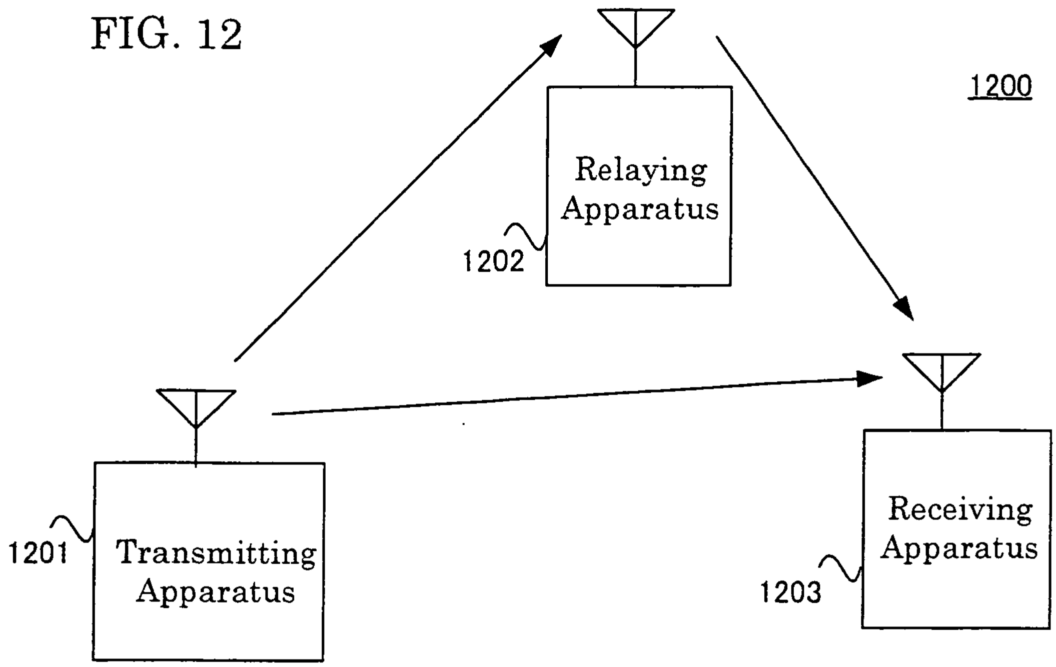
1200
Relaying Apparatus
1202
Transmitting Apparatus
1201
Receiving Apparatus
1203

FIG. 13

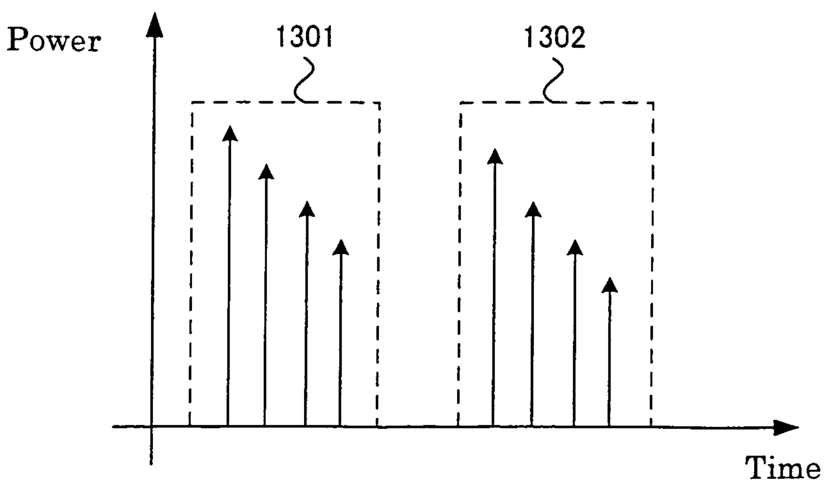
Power
1301
1302
Time

FIG. 14

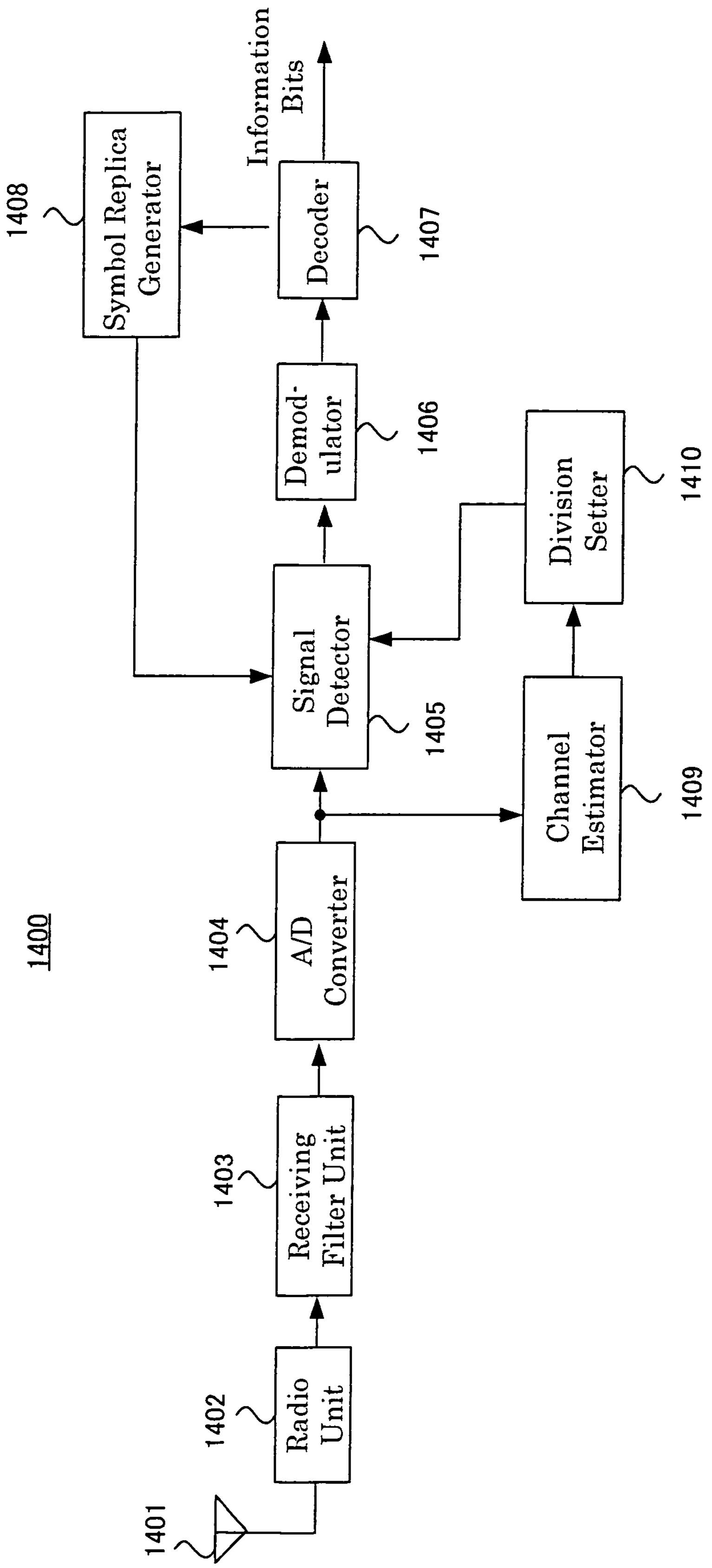
1400
1401
Radio Unit
1402
Receiving Filter Unit
1403
A/D Converter
1404
Signal Detector
1405
Demod-ulator
1406
Decoder
1407
Information Bits
Symbol Replica Generator
1408
Channel Estimator
1409
Division Setter
1410

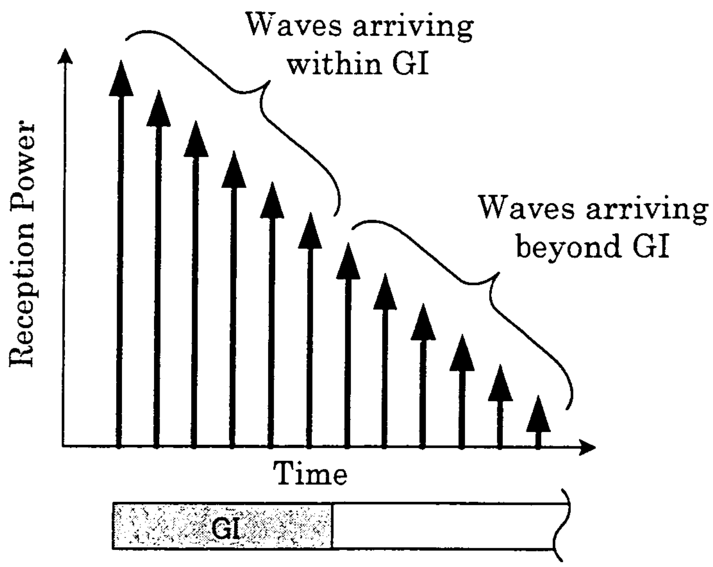
Waves arriving
within GI
Waves arriving
beyond GI
Reception Power
Time
GI

FIG. 15

FIG. 16

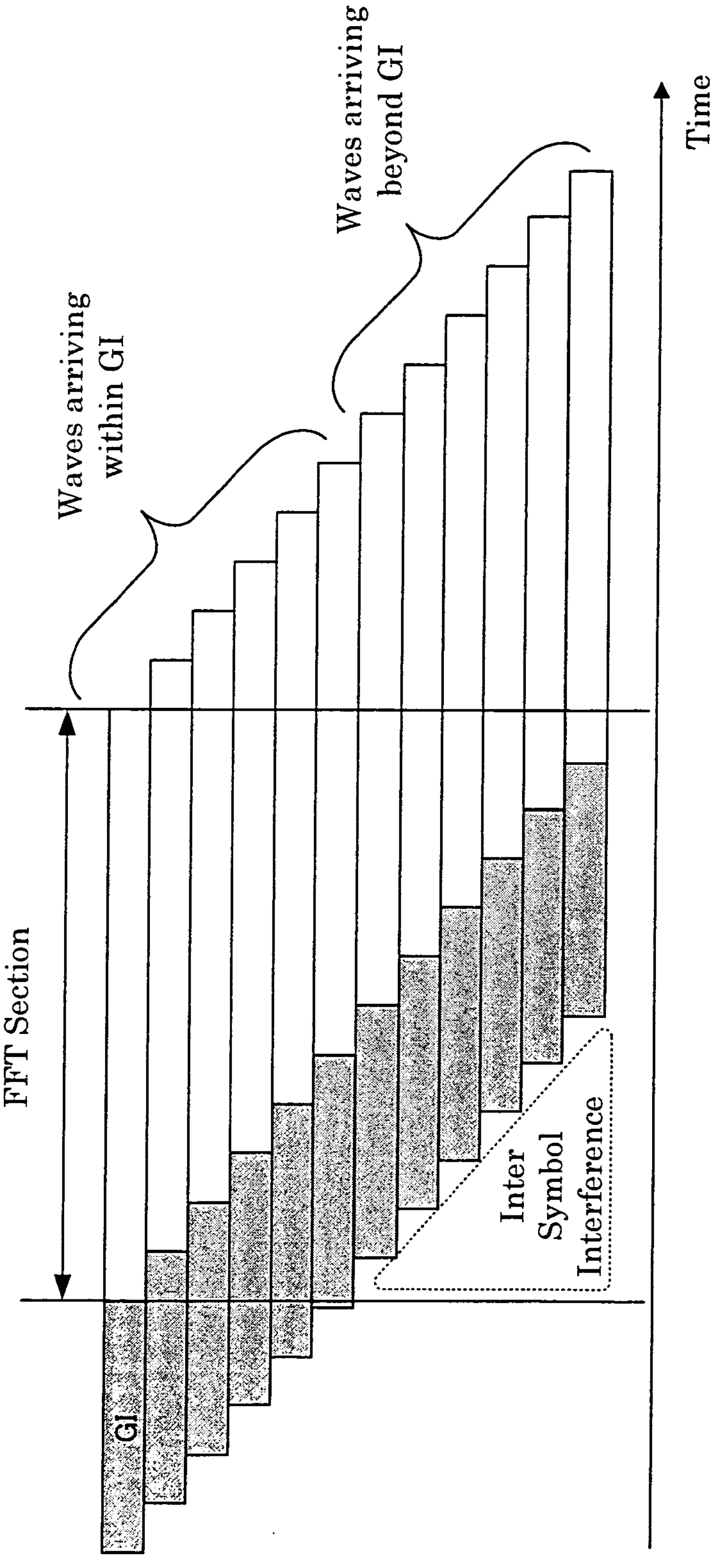
Waves arriving within GI
Waves arriving beyond GI
Time
FFT Section
GI
Inter Symbol Interference

## INTERNATIONAL SEARCH REPORT

International application No.
PCT/JP2010/058802

A. CLASSIFICATION OF SUBJECT MATTER
*H04J11/00*(2006.01)i, *H04B1/10*(2006.01)i, *H04B7/005*(2006.01)i, *H04B7/04* (2006.01)i, *H04J99/00*(2009.01)i

According to International Patent Classification (IPC) or to both national classification and IPC

B. FIELDS SEARCHED

Minimum documentation searched (classification system followed by classification symbols)
H04J11/00, H04B1/10, H04B7/005, H04B7/04, H04J99/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)
IEEE Xplore

C. DOCUMENTS CONSIDERED TO BE RELEVANT

| Category* | Citation of document, with indication, where appropriate, of the relevant passages | Relevant to claim No. |
|---|---|---|
| X<br>Y<br>A | Kazuyuki Shimezawa, et al., A Novel SC/MMSE Turbo Equalization for Multicarrier System With Insufficient Cyclic Prefix, Personal, Indoor and Mobile Radio Communications, 2008. PIMRC 2008. IEEE 19th International Symposium on, 2008.09.15, pp.1-5 | 1,4-6<br>7,10-14<br>2,3,8,9 |
| Y | JP 2005-150839 A (NTT Docomo Inc.), 09 June 2005 (09.06.2005), paragraphs [0145] to [0150]; fig. 12 & US 2005/0129136 A1 & EP 1531592 A2 & CN 1617534 A | 7,10-14 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 June, 2010 (17.06.10) | 29 June, 2010 (29.06.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

INTERNATIONAL SEARCH REPORT

International application No.
PCT/JP2010/058802

C (Continuation). DOCUMENTS CONSIDERED TO BE RELEVANT

| Category* | Citation of document, with indication, where appropriate, of the relevant passages | Relevant to claim No. |
|---|---|---|
| Y | Jun SHIKIDA et al., "MIMO-OFDM IDMA ni Okeru Kurikaeshi Multi User Kenshutsuki no Tokusei Hyoka", The Institute of Electronics, Information and Communication Engineers Sogo Taikai Koen Ronbunshu, 17 March 2009 (17.03.2009), S-74, 75, BS-3-17 | 12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004221702 A